(19) **Europäisches Patentamt**
**European Patent Office**
**Office européen des brevets**

(11) **EP 4 660 576 A1**

(12) **EUROPEAN PATENT APPLICATION**
published in accordance with Art. 153(4) EPC

(43) Date of publication:
**10.12.2025 Bulletin 2025/50**

(21) Application number: **24750358.4**

(22) Date of filing: **31.01.2024**

(51) International Patent Classification (IPC):
***G01B 11/25*** (2006.01)

(52) Cooperative Patent Classification (CPC):
**G01B 11/25**

(86) International application number:
**PCT/JP2024/003160**

(87) International publication number:
**WO 2024/162409 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.02.2023 JP 2023013803
24.02.2023 JP 2023027011**

(71) Applicant: **DENSO WAVE INCORPORATED
Agui-cho
Chita-gun, Aichi 470-2297 (JP)**

(72) Inventors:
• **INOUE, Makito
Chita-gun, Aichi 470-2297 (JP)**
• **MITANI, Yusuke
Chita-gun, Aichi 470-2297 (JP)**
• **TSUJIMOTO, Masataka
Chita-gun, Aichi 470-2297 (JP)**

(74) Representative: **Kuhnen & Wacker
Patent- und Rechtsanwaltsbüro PartG mbB
Prinz-Ludwig-Straße 40A
85354 Freising (DE)**

(54) **THREE-DIMENSIONAL MEASUREMENT DEVICE**

(57) A three-dimensional measuring apparatus includes a projection unit configured to project a predetermined fringe pattern on a measurement target region, an imaging unit configured to capture a measurement target object disposed in the measurement target region on which the predetermined fringe pattern is projected, a measuring unit configured to measure a three-dimensional shape of the measurement target object captured by the imaging unit, and a control unit configured to control the projection unit. The predetermined fringe pattern includes a plurality of fringe regions that are disposed along a first direction, and each of the plurality of fringe regions changes in luminance in the first direction at a predetermined ratio and does not change in luminance in a second direction orthogonal to the first direction. The imaging unit includes an imaging device configured to output event data including two-dimensional point data that identifies a position of a pixel subjected to a luminance change when light is received. The measuring unit measures the three-dimensional shape of the measurement target object by a light section method on the basis of positions of a plurality of pixels identified from pieces of the event data output in an identical time slot within unit time within which the imaging unit performs capturing.

**FIG.4A**

# FIG.4B

Sa

Sb

Sd

Sc

R0

| Pa | Pb | Pc | Pd |

# FIG.4C

Sa

Sb

Sd

Sc

R0

| Pa | Pb | Pc | Pd |

**Description**

Technical Field

The present disclosure relates to a three-dimensional measuring apparatus that measures the three-dimensional shape of a measurement target object.

Background Art

For example, an apparatus that uses a phase shift method has been conventionally known as a three-dimensional measuring apparatus that measures the three-dimensional shape and the like of a measurement target object. The phase shift method is a technique that projects a plurality of phase-shifted fringe pattern images to three-dimensionally measure a measurement target object on which the plurality of these fringe pattern images are projected.
To allow an image of a measurement target object to be generated at higher speed by the technique that performs three-dimensional measurement using the phase shift method in this way, a three-dimensional measuring apparatus disclosed in PTL 1 below has been known. This three-dimensional measuring apparatus adopts a sine-wave pattern as a predetermined fringe pattern used for the phase shift method. In addition, an event camera is adopted that outputs event data including two-dimensional point data that identifies the position of a pixel subjected to a luminance change when light is received. A captured image of the measurement target object on which the fringe pattern is projected is generated from the event data. The event camera is characterized by not outputting pixel information having no luminance change, that is, redundant data output by a conventional camera. This makes it possible to obtain information regarding the shape of the measurement target object at higher speed, for example, by decreasing the amount of data communication and decreasing image processing. Meanwhile, the event data does not include luminance information that is used for the phase shift method. The luminance information (i.e., fringe pattern information) is therefore obtained on the basis of the time difference between the generation time of event data having a positive luminance change (i.e., event data having positive polarity) output for each of pixels when the light is turned on and the generation time of event data having a negative luminance change (i.e., event data having negative polarity) output when the light is turned off. This makes it possible to measure the three-dimensional shape of the measurement target object using the pieces of event data.

Citation List

Patent Literature

PTL 1: JP 2021-067644 A

Summary of the Invention

In addition, the three-dimensional measuring apparatus disclosed in PTL 1 projects, on the measurement target object, a pattern that is used for a light section method, and changes in luminance to increase from the left side to the right side at a constant ratio and does not change in luminance in the up-down direction. The three-dimensional shape of the measurement target object is then measured by the light section method that uses event data output when that pattern is captured. Specifically, the positions of pixels identified from pieces of event data output in the same time slot are treated as the positions of the pixels irradiated with linear light in the light section method, thereby making it possible to perform three-dimensional measurement by the light section method.
However, as described above, the measurement technique that projects a pattern used for the light section method has to change luminance from the left end to the right end of the projection region. It may therefore take a longer capturing period, that is, a longer processing time to perform three-dimensional measurement processing, as the pixels in the left-right direction increase in number.
The present disclosure has been devised to solve the problem described above. An object of the present disclosure is to provide an apparatus that makes it possible to prevent the measurement processing time of a three-dimensional shape from increasing depending on increasing pixels in a direction of changing luminance in a pattern for a light section method.
A three-dimensional measuring apparatus according to an embodiment of the present disclosure includes:

a projection unit configured to project a predetermined fringe pattern on a measurement target region;
an imaging unit configured to capture a measurement target object disposed in the measurement target region on which the predetermined fringe pattern is projected;
a measuring unit configured to measure a three-dimensional shape of the measurement target object captured by the imaging unit; and

a control unit configured to control the projection unit, in which

the predetermined fringe pattern includes a plurality of fringe regions that are disposed along a first direction, and each of the plurality of fringe regions changes in luminance in the first direction at a predetermined ratio and does not change in luminance in a second direction orthogonal to the first direction,

the imaging unit includes an imaging device configured to output event data including two-dimensional point data that identifies a position of a pixel subjected to a luminance change when light is received, and

the measuring unit measures the three-dimensional shape of the measurement target object by a light section method on the basis of positions of a plurality of pixels identified from pieces of the event data output in an identical time slot within unit time within which the imaging unit performs capturing.

This makes it possible to obtain, for each of the fringe regions, an emission line that joins the plurality of pixels in the second direction among the positions of the plurality of pixels identified from the pieces of event data output in the same time slot. In a light section method, the three-dimensional shape is measured by scanning the measurement target region using the emission line. The scan time of the emission line corresponds to the capturing period. It is therefore possible to decrease the capturing period, that is, processing time necessary to perform measurement processing on the three-dimensional shape, as the number of fringe regions increases in the predetermined fringe pattern projected on the measurement target region. It is thus possible to prevent the measurement processing time of the three-dimensional shape from increasing depending on increasing pixels in a direction of changing luminance in the predetermined fringe pattern.

Brief Description of the Drawings

[Fig. 1] Fig. 1 is a block diagram illustrating a schematic configuration of a three-dimensional measuring apparatus according to a first embodiment.

[Fig. 2A] Fig. 2A is a diagram exemplifying a fringe pattern according to the first embodiment that is used for a light section method.

[Fig. 2B] Fig. 2B is a diagram for describing a relationship between light-emitting time for projecting the fringe pattern in Fig. 2A and a position of a pixel in a left-right direction.

[Fig. 3A] Fig. 3A is a diagram illustrating a state observed 10 μs after the fringe pattern in Fig. 2A is projected on a flat surface.

[Fig. 3B] Fig. 3B is a diagram illustrating a state observed 20 μs after the fringe pattern in Fig. 2A is projected on the flat surface.

[Fig. 3C] Fig. 3C is a diagram illustrating a state observed 30 μs after the fringe pattern in Fig. 2A is projected on the flat surface.

[Fig. 4A] Fig. 4A is a diagram illustrating a state observed 10 μs after the fringe pattern in Fig. 2A is projected on a measurement target object having a spherical surface.

[Fig. 4B] Fig. 4B is a diagram illustrating a state observed 20 μs after the fringe pattern in Fig. 2A is projected on the measurement target object having the spherical surface.

[Fig. 4C] Fig. 4C is a diagram illustrating a state observed 30 μs after the fringe pattern in Fig. 2A is projected on the measurement target object having the spherical surface.

[Fig. 5] Fig. 5 is a diagram illustrating, for a plurality of pixels in the left-right direction, a result of comparison between an output timing of event data having negative polarity obtained when a fringe pattern including four fringe regions is captured and an output timing of event data having negative polarity obtained when a fringe pattern including one fringe region is captured.

[Fig. 6A] Fig. 6A is a diagram exemplifying a fringe pattern for a light section method according to a modification example of the first embodiment.

[Fig. 6B] Fig. 6B is a diagram for describing a relationship between light-emitting time for projecting the fringe pattern in Fig. 6A and a position of a pixel in a left-right direction.

[Fig. 7] Fig. 7 is a diagram for describing a state in which a measurement target object including a transparent plate on a black plate is measured in a second embodiment.

[Fig. 8A] Fig. 8A is a diagram for describing a triangle-wave fringe pattern.

[Fig. 8B] Fig. 8B is a diagram for describing an event waveform generated in a case where only the black plate is captured.

[Fig. 8C] Fig. 8C is a diagram for describing an event waveform generated in a case where only the transparent plate is captured.

[Fig. 8D] Fig. 8D is a diagram for describing an event waveform generated in a case where the measurement target object including the transparent plate on the black plate is captured.

[Fig. 9] Fig. 9 is a diagram for describing a portion of an event waveform that is used for three-dimensional measurement in a case where presence of the transparent plate is not taken into consideration, and a result of measurement using the portion of the event waveform.

[Fig. 10A] Fig. 10A is a diagram for describing a first fringe pattern of two types of fringe patterns in a third embodiment.

[Fig. 10B] Fig. 10B is a diagram for describing a second fringe pattern of the two types of fringe patterns in the third embodiment.

[Fig. 11A] Fig. 11A is a diagram for describing a first event waveform generated when the first fringe pattern illustrated in Fig. 10A is captured, and a result of measurement using the first event waveform.

[Fig. 11B] Fig. 11B is a diagram for describing a second event waveform generated when the second fringe pattern illustrated in Fig. 10B is captured, and a result of measurement using the second event waveform.

[Fig. 12] Fig. 12 is a diagram for describing a composite waveform obtained by combining the first event waveform and the inverted second event waveform.

[Fig. 13A] Fig. 13A is a diagram illustrating light-emitting time in a fringe region with fringe number 1 in a fourth embodiment.

[Fig. 13B] Fig. 13B is a diagram illustrating light-emitting time in a fringe region with fringe number 2 in the fourth embodiment.

[Fig. 13C] Fig. 13C is a diagram illustrating light-emitting time in a fringe region with fringe number 3 in the fourth embodiment.

[Fig. 13D] Fig. 13D is a diagram illustrating light-emitting time in a fringe region with fringe number 4 in the fourth embodiment.

[Fig. 14] Fig. 14 is a diagram for describing event waveforms generated when a measurement target object including a transparent plate on a black plate is measured, and a relationship between a fringe number identified by one event waveform caused by a shape of the black plate and a fringe number identified by another event waveform caused by a shape of the transparent plate.

[Fig. 15A] Fig. 15A is a diagram for describing that one piece of event data having negative polarity is output in a case where the fringe number of the black plate and the fringe number of the transparent plate are identical.

[Fig. 15B] Fig. 15B is a diagram for describing that two pieces of event data having negative polarity are output in a case where the fringe number of the black plate and the fringe number of the transparent plate are different.

[Fig. 16] Fig. 16 is a diagram for describing two types of fringe number identifying patterns in a fifth embodiment.

[Fig. 17] Fig. 17 is a diagram for describing a predetermined ratio in a fringe pattern.

[Fig. 18] Fig. 18 is a flowchart illustrating an example of schematic processing of a three-dimensional measuring apparatus according to any of the first to fifth embodiments.

[Fig. 19] Fig. 19 is a diagram for describing a state in which a fringe pattern for a typical phase shift method is projected on a measurement target object.

[Fig. 20] Fig. 20 is a diagram for describing three-dimensional measurement by the phase shift method.

[Fig. 21A] Fig. 21A is a diagram for describing a relationship between a pixel and light-on time for one of a plurality of fringe regions in a predetermined fringe pattern projected from a projection unit in a sixth embodiment.

[Fig. 21B] Fig. 21B is a diagram for describing fringe pattern information obtained for each of pixels when a surface on which a fringe region in Fig. 21A is projected is captured.

[Fig. 22] Fig. 22 is a diagram for describing a state in which two phase values are calculated for one light-on time.

[Fig. 23] Fig. 23 is a diagram for describing a relationship between a pixel and light-on time for one of a plurality of fringe regions in a predetermined fringe pattern projected from a projection unit in a seventh embodiment.

[Fig. 24] Fig. 24 is a flowchart illustrating an example of schematic processing of a three-dimensional measuring apparatus according to any of the sixth and seventh embodiments.

[Fig. 25] Fig. 25 is a hardware configuration diagram of a three-dimensional measuring apparatus according to an embodiment of the present disclosure.

Description of the Embodiments

<First Embodiment>

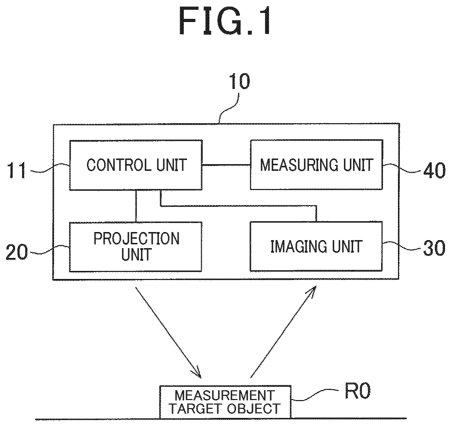

Hereinafter, a three-dimensional measuring apparatus according to a first embodiment of the present disclosure will be described with reference to the drawings. A three-dimensional measuring apparatus 10 according to the present embodiment is an apparatus that measures the three-dimensional shape of a measurement target object R0. As illustrated in Fig. 1, the three-dimensional measuring apparatus 10 includes a control unit 11, a projection unit 20, an imaging unit 30, and a measuring unit 40. The control unit 11 is in charge of overall control. The projection unit 20 projects a predetermined fringe pattern on the measurement target object R0. The imaging unit 30 captures the measurement target object R0 on which the predetermined fringe pattern is projected. The measuring unit 40 measures the three-dimensional shape of the measurement target object R0 from this captured image. The three-dimensional measuring apparatus 10 configured in this way may be assembled, for example, into a hand of a robot to measure the three-dimensional shape of the measurement target object R0 such as a workpiece that is to relatively move with respect to the hand at high speed. Here, the relative movement refers to relative movement between the movement of the three-dimensional measuring apparatus 10 assembled into the hand of the robot and the movement of the measurement target object R0. In a case where the three-dimensional measuring apparatus 10 has a fixed position, the relative movement is the movement of the measurement target object R0.

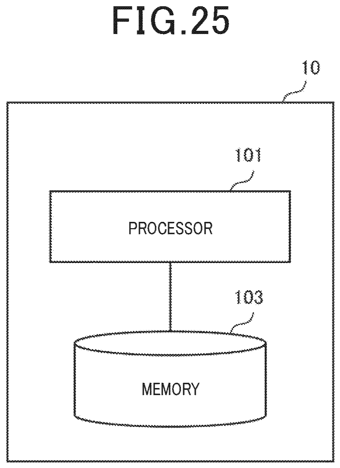

As illustrated in Fig. 25, the three-dimensional measuring apparatus 10 includes a processor 101 and a memory 103 as hardware components. For example, the three-dimensional measuring apparatus 10 may include a microcomputer. The microcomputer may include a central processing unit (CPU), a system bus, an input/output interface, a read only memory (ROM), a random-access memory (RAM), a non-volatile memory, and the like. In addition to a program regarding robot control, the memory 103 stores, in advance, a program regarding control over the projection unit 20, a program for executing control processing using a result of three-dimensional measurement by the measuring unit 40, and the like. The hardware components may implement the functions of the control unit 11 and the measuring unit 40.

The projection unit 20 is a so-called DLP (registered trademark) projector. The projection unit 20 is controlled by the control unit 11. The projection unit 20 reflects light coming from a light source using a DMD (digital micromirror device) device to project a predetermined fringe pattern described below. The DMD device includes micromirrors corresponding to the respective pixels of an image projected on a screen. The micromirrors are disposed in an array. The DMD device switches (i.e., turns ON/OFF) light to be emitted to the screen in units of microseconds by changing the angles of the respective mirrors. Each of the mirrors is therefore switched to a light-on state by being switched from reflection OFF to reflection ON and switched to a light-off state by being switched from reflection ON to reflection OFF. That is, whether the DMD in which the plurality of mirrors are disposed in an array reflects incident light is controlled by the control unit 11 for each of the mirrors. The projection unit 20 hereby projects a predetermined fringe pattern. The control unit 11 therefore changes the gradation (i.e., brightness) of reflected light depending on the ratio between the time for which each mirror is ON and the time for which each mirror is OFF. This allows the gradation of a projected image to be displayed on the basis of the image data. In the present embodiment, the projection unit 20 includes mirrors corresponding to $k \times l$ (e.g., $1140 \times 912$) pixels having (1, 1) as the upper left coordinates and *(k, l)* as the lower right coordinates.

In such a configuration, as the light-emitting time (i.e., the time from reflection ON to reflection OFF) of a single pulse light emission made once within unit time secured for each light-emitting state grows longer, the light-emitting state results in higher brightness. It is therefore possible to identify the light-emitting state depending on the light-emitting time. For example, a case will be considered where R color (red), G color (green), and B color (blue) are prepared as pieces of light entering the DMD device. In this case, an R color light-emitting state caused by the R color being reflected by a mirror, a G color light-emitting state caused by the G color being reflected by a mirror, and a B color light-emitting state caused by the B color being reflected by a mirror are repeated in a predetermined short-time period. The light-emitting time of each light-emitting state is individually adjusted, thereby allowing a color image to be projected. The control unit 11 therefore sets a reflection ON/OFF timing within the unit time for each of the mirrors depending on a predetermined fringe pattern described below.

The imaging unit 30 is a so-called event camera. The imaging unit 30 includes an imaging device that outputs event data (specifically, two-dimensional point data, time, and the polarity of a luminance change) including two-dimensional point data that identifies the position of a pixel subjected to a luminance change when light is received. The imaging unit 30 generates a captured image from the event data output from the imaging device. Therefore, in the imaging unit 30, event data having positive polarity (i.e., positive luminance change) is output when each of the pixels in the captured image is subjected to a luminance change toward higher brightness by light being received. Event data having negative polarity (i.e., negative luminance change) is output when each of the pixels is subjected to a luminance change toward lower brightness by the light being extinguished. The pieces of two-dimensional point data of a plurality of pieces of event data output within a certain period of time are each plotted on a predetermined flat surface as a point, thereby generating image data of the captured measurement target object R0. The imaging unit 30 outputs the image data or the event data (i.e., the two-dimensional point data, the time, the polarity of the luminance change) generated in this way to the measuring unit 40.

The measuring unit 40 is controlled by the control unit 11. On the basis of a captured image obtained by the imaging unit 30 capturing the measurement target object R0 on which a predetermined fringe pattern defined in advance is projected from the projection unit 20, the measuring unit 40 measures the three-dimensional shape of the measurement target object R0 by a light section method.

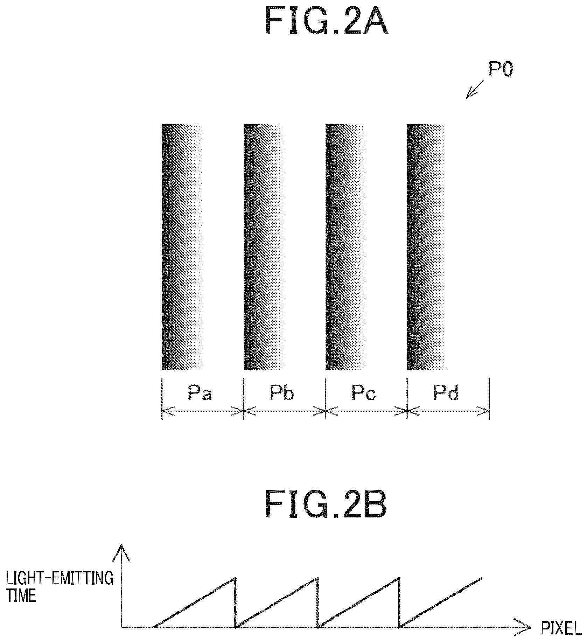

The projection unit 20 therefore projects the predetermined fringe pattern (also referred to as a fringe pattern P0 below) for the light section method. The fringe pattern P0 in the present embodiment includes a plurality of fringe regions disposed along a first direction. Each of the plurality of fringe regions changes in luminance in the first direction at a predetermined ratio and does not change in luminance in a second direction orthogonal to this first direction. Specifically, the fringe pattern P0 is projected such that four fringe regions Pa to Pd exemplified in Fig. 2A are disposed along a left-right direction (i.e., first direction) by a projection like a sawtooth wave exemplified in Fig. 2B. Each of the fringe regions Pa to Pd changes in luminance such that the luminance increases at a constant ratio from the left side to the right side in the left-right direction (i.e., first direction), and does not change in luminance in an up-down direction (i.e., second direction). As can be seen from Fig. 2B, a longer light-emitting time is set for pixels closer to the right side in each of the fringe regions, thereby projecting the fringe pattern P0 illustrated in Fig. 2A.

The imaging unit 30 captures a surface on which the fringe pattern P0 like this is projected. The imaging unit 30 captures an emission line that joins the positions of pixels in the up-down direction among a plurality of pixels identified from pieces of event data each having negative polarity output in the same time slot. The emission line is a line for each of the fringe regions Pa to Pd in the up-down direction. The emission line moves in each of the fringe regions Pa to Pd from the left side to the right side within unit time. The movement of the emission line is captured as a moving image. This is because, to make the fringe region darker as the left end of the fringe region is approached, earlier timings are set for the end of light emission as the left end is approached. To make the fringe region brighter as the right end of the fringe region is approached, later timings are set for the end of light emission as the right end of the fringe region is approached. Substantially the same timings are set for the end of light emission in the up-down direction.

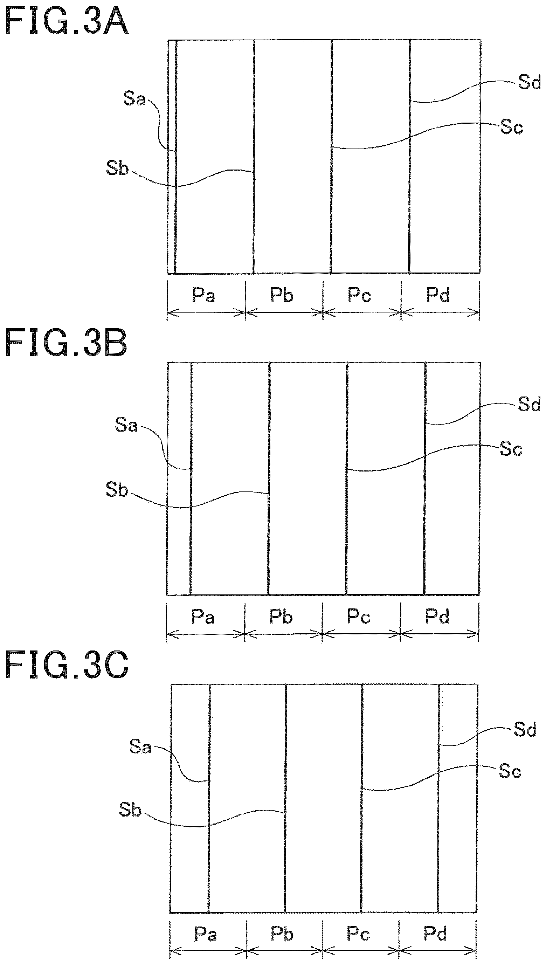

Specifically, for example, as illustrated in Fig. 3A, emission lines Sa to Sd that are lines in the up-down direction are respectively captured near the respective left ends of the fringe regions Pa to Pd in a state observed 10 $\mu$s after the projection unit 20 starts to project the fringe pattern P0 on a flat surface. After that, for example, as illustrated in Fig. 3B, the emission lines Sa to Sd moved to the right side are captured in a state observed 20 $\mu$s after the start of the projection. As illustrated in Fig. 3C, the emission lines Sa to Sd further moved to the right side are captured in a state observed 30 $\mu$s after the start of the projection.

Such a captured emission line (i.e., a line that joins the positions of a plurality of pixels in the up-down direction among a plurality of pixels identified from pieces of event data each having negative polarity) that is a line in the up-down direction is usable as linear laser light used in the light section method.

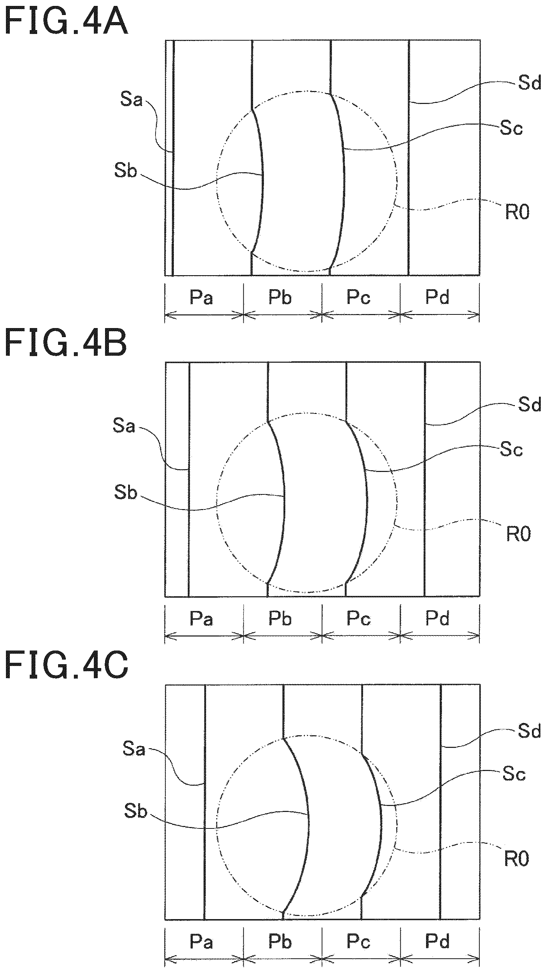

The following considers, as an example, each of the emission lines Sa to Sd captured by the imaging unit 30 in a case where the fringe pattern P0 described above is projected on the measurement target object R0 having a spherical surface. The measurement of the three-dimensional shape of the measurement target object R0 by the light section method will be described with reference to Figs. 4A to 4C. It is to be noted that Figs. 4A to 4C each illustrate the measurement target object R0 using a chain double-dashed line for the sake of convenience.

In the fringe regions Pb and Pc immediately after the fringe pattern P0 on the measurement target object R0 starts to be captured, the emission lines Sb and Sc deformed depending on the shape of the measurement target object R0 are captured. In the fringe regions Pb and Pc 10 $\mu$s after the start of the capturing, the emission lines Sb and Sc each moved to the right side with respect to the measurement target object R0 and deformed depending on the shape of the measurement target object R0 at the positions of the moved emission lines Sb and Sc are then captured as illustrated in Fig. 4A. After that, in the fringe regions Pb and Pc 20 $\mu$s and 30 $\mu$s after the start of the imaging, the emission lines Sb and Sc further moved to the right side with respect to the measurement target object R0 and deformed depending on the shape of the measurement target object R0 at the positions of the moved emission lines Sb and Sc are captured as illustrated in Figs. 4B and 4C. Meanwhile, in the fringe regions Pa and Pd, as can be seen from Figs. 4A to 4C, the emission lines Sa and Sd do not overlap with the measurement target object R0 and thus each move to the right side and are each captured while remaining a line in the up-down direction.

This allows the measuring unit 40 to measure the three-dimensional shape of the measurement target object R0 by the light section method on the basis of each of the emission lines Sa to Sd captured when the measurement target object R0 is captured within the unit time, that is, the positions of a plurality of pixels identified from pieces of event data each having negative polarity output in the same time slot.

As described above, in the three-dimensional measuring apparatus 10 according to the present embodiment, the fringe pattern P0 projected on the measurement target object R0 by the projection unit 20 includes the fringe regions Pa to Pd. Each of the fringe regions Pa to Pd changes in luminance at a predetermined ratio in the left-right direction (i.e., first direction) and does not change in luminance in the up-down direction (i.e., the second direction orthogonal to the first direction). The imaging unit 30 includes an imaging device that outputs event data including two-dimensional point data which identifies the position of a pixel subjected to a luminance change when light is received. The measuring unit 40 measures the three-dimensional shape of the measurement target object R0 by the light section method on the basis of the positions of a plurality of pixels identified from pieces of the event data each having negative polarity output in the same time slot within unit time within which the measurement target object R0 is captured.

The emission lines Sa to Sd that each join the positions of pixels in the up-down direction among a plurality of pixels identified from pieces of event data each having negative polarity output in the same time slot are hereby obtained for the fringe regions Pa to Pd respectively. Therefore, as the fringe pattern P0 projected from the projection unit 20 includes more fringe regions, it is possible to decrease the capturing period for capturing the fringe pattern P0 more.

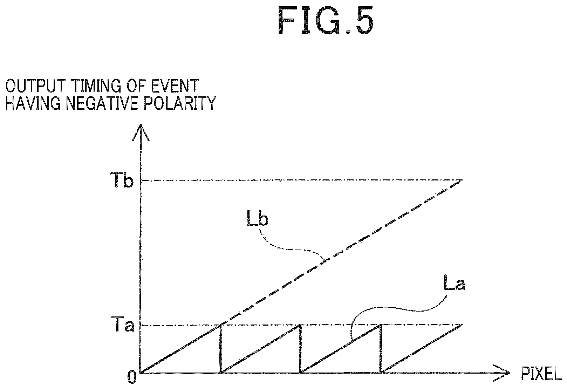

For example, a fringe pattern including only one fringe region that changes in luminance in the left-right direction at a constant ratio is projected such that the light-emitting time gradually increases from the left end to the right end. The output timings of pieces of event data each having negative polarity obtained in a case where the fringe pattern is projected on a flat surface and captured therefore come later as the right end is approached (see, for example, a dashed line Lb in Fig. 5). The capturing period (corresponding, for example, to reference sign Tb in Fig. 5) for capturing the fringe pattern is proportional to the number of pixels. Meanwhile, as in the present embodiment, the output timings of pieces of event data each having negative polarity obtained in a case where the fringe pattern P0 including the four fringe regions Pa to Pd is captured are the same for the four fringe regions (see, for example, a solid line La in Fig. 5). This makes it possible to decrease the capturing period (corresponding, for example, to reference sign Ta in Fig. 5) for capturing the fringe pattern P0 to a quarter of the capturing period of the fringe pattern including only the one fringe region.

In this way, it is possible to decrease the capturing period for capturing a predetermined fringe pattern, that is, the processing time necessary for three-dimensional measurement processing. That is, it is possible to prevent the measurement processing time of the three-dimensional shape from increasing depending on increasing pixels in a direction of changing luminance in the predetermined fringe pattern.

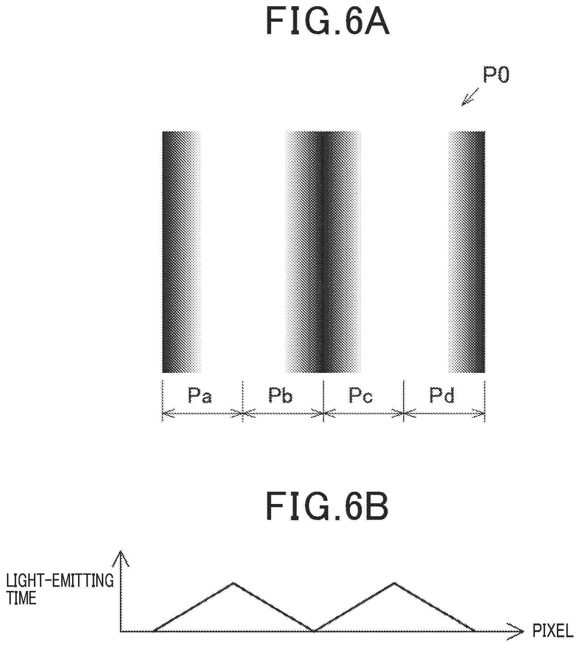

It is to be noted that the predetermined fringe pattern for the light section method projected from the projection unit 20 is not limited to the sawtooth waves as exemplified in Figs. 2A and 2B. For example, the predetermined fringe pattern may be another pattern such as triangle waves (e.g., a waveform shaped like an isosceles triangle) and the like as exemplified in Figs. 6A and 6B that each includes a plurality of fringe regions that each changes in luminance in the first direction at a predetermined ratio and does not each change in luminance in the second direction orthogonal to this first direction and each have the plurality of fringe regions therein along the first direction.

<Second Embodiment>

Next, a three-dimensional measuring apparatus according to a second embodiment of the present disclosure will be described with reference to the drawings. The present embodiment is different from the first embodiment chiefly in that three-dimensional measurement is performed by the light section method with a non-transparent object and a transparent object distinguished from each other. Constituent portions that are substantially the same as the constituent portions in the first embodiment are thus denoted by the same reference sign and description thereof is omitted.

The imaging unit 30 receives light coming from the non-transparent object and light coming from the transparent object for one pixel to output two pieces of event data (e.g., pieces of event data each having negative polarity) for the one pixel in some cases. In such a case, the event data for the non-transparent object and the event data for the transparent object coexist as the event data (e.g., event data having negative polarity) output first in each of the pixels. For this reason, accurate three-dimensional measurement is interrupted in some cases.

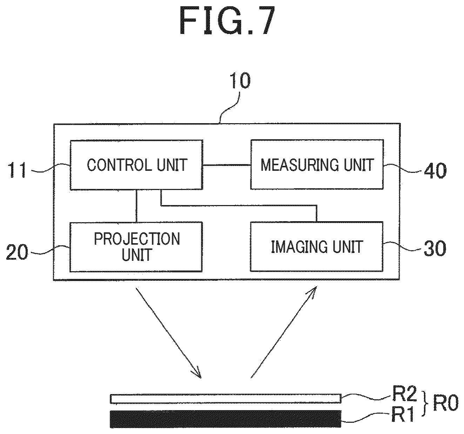

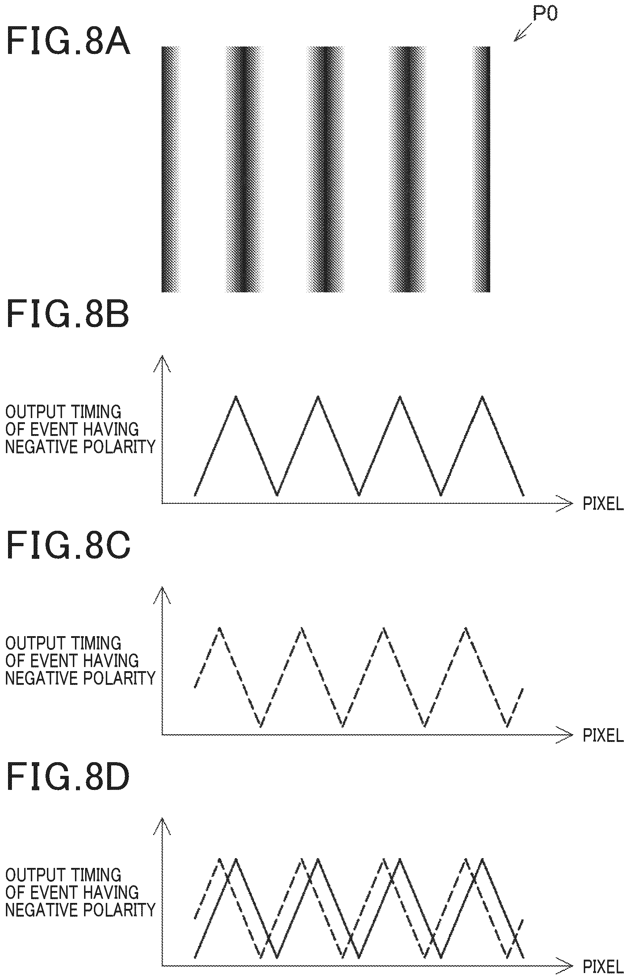

For example, a case will be assumed where the three-dimensional shape of the measurement target object R0 is measured by the light section method as described above with the triangle-wave fringe pattern P0 as illustrated in Fig. 8A (i.e., a fringe pattern in which the luminance change ratios of adjacent fringe regions are reversed with respect to light and dark) projected on the measurement target object R0 including a transparent plate R2 on a black plate R1 as illustrated in Fig. 7. It is to be noted that the black plate R1 corresponds to an example of the non-transparent object and the transparent plate R2 corresponds to an example of the transparent object.

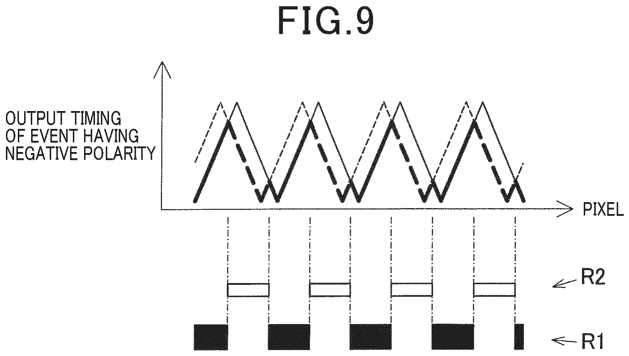

In a case where only the black plate R1 is captured, a waveform (also referred to as an event waveform below) in two dimensions representing the output timings of pieces of event data each having negative polarity output when the black plate R1 is captured on the vertical axis and the positions of pixels in the left-right direction (i.e., first direction) on the horizontal axis is generated as exemplified in Fig. 8B. In addition, in a case where only the transparent plate R2 is captured, an event waveform is generated as exemplified in Fig. 8C. In addition, event waveforms generated when the measurement target object R0 including the transparent plate R2 on the black plate R1 is captured are generated as in Fig. 8D. It is to be noted that Figs. 8A to 8D and Fig. 9 described below illustrate event waveforms generated due to the shape of the black plate R1 using solid lines and event waveforms generated due to the shape of the transparent plate R2 using dashed lines.

In a case where the presence of the transparent plate R2 is not taken into consideration, three-dimensional measurement is performed using event data having negative polarity output first in each of the pixels. That is, three-dimensional measurement is performed using the portion of the event waveform for the black plate R1 and the portion of the event waveform for the transparent plate R2 illustrated by the thick line in the graph in the upper part of Fig. 9. Therefore, the black plate R1 and the transparent plate R2 are supposed to be measured as in Fig. 7, but only a portion of the black plate R1 and a portion of the transparent plate R2 are actually measured as illustrated in the lower part of Fig. 9. A result of the measurement of the other portions may be missing.

A case will be therefore assumed where the measuring unit 40 according to the present embodiment measures the measurement target object R0 including the transparent object on the non-transparent object. The measuring unit 40 measures the three-dimensional shape of the measurement target object R0 by the light section method on the basis of the positions of a plurality of pixels identified from pieces of event data output in the same time slot using the event waveform generated as described above.

Specifically, the measuring unit 40 generates an event waveform in two dimensions representing the output timings of pieces of event data each having negative polarity output at the time of capturing on the vertical axis and the positions of pixels in the left-right direction (i.e., first direction) on the horizontal axis. In this event waveform, two pieces of event data each having negative polarity are output for a pixel that captures the non-transparent object and the transparent object. Therefore, as exemplified in Fig. 8D, the event waveform includes one event waveform (see, for example, the solid waveform in Fig. 8D) caused by the shape of the non-transparent object and the other event waveform (see, for example, the dashed waveform in Fig. 8D) caused by the shape of the transparent object. The non-transparent object and the transparent object are spaced apart and it is thus possible to easily separate the one event waveform and the other event waveform. Therefore, the use of the one event waveform and the other event waveform separated from the event waveform generated as described above makes it possible to perform three-dimensional measurement with the non-transparent object and the transparent object distinguished from each other. In particular, the imaging device typically has a high voltage and is thus relatively low in sensitivity in a bright state immediately before event data having negative polarity is output. This suppresses generation of noise. In this way, the use of the output timings of pieces of event data each having negative polarity makes it possible to increase the measurement accuracy of three-dimensional measurement in comparison with the use of the output timings of pieces of event data each having positive polarity.

<Third Embodiment>

Next, a three-dimensional measuring apparatus according to a third embodiment of the present disclosure will be described with reference to the drawings. The present embodiment is different from the second embodiment chiefly in that three-dimensional measurement is performed by the light section method with a non-transparent object and a transparent object distinguished from each other by projecting two types of fringe patterns. Constituent portions that are substantially the same as the constituent portions in the second embodiment are thus denoted by the same reference sign and description thereof is omitted.

In a case where two pieces of event data each having negative polarity output in each of the pixels at the time of capturing performed once are used as in the second embodiment, event data that is not supposed to be output is generated as noise and interrupts accurate three-dimensional measurement in some cases. This may be because event data having negative polarity is further output for the same pixel after the first event data having negative polarity is output.

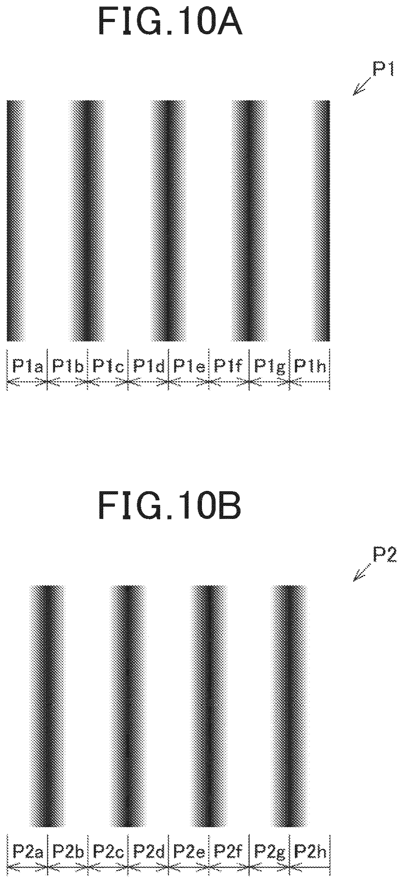

Therefore, in the present embodiment, the projection unit 20 first projects a first fringe pattern P1 as the predetermined fringe pattern and then projects a second fringe pattern P2 in which the predetermined ratio of the first fringe pattern P1 is reverse with respect to light and dark. For example, the projection unit 20 projects the second fringe pattern P2 as illustrated in Fig. 10B after projecting the first fringe pattern P1 as illustrated in Fig. 10A. As illustrated in Figs. 10A and 10B, fringe regions P2a to P2h of the second fringe pattern P2 are each obtained by inverting the left and right of each of fringe regions P1a to P1h of the first fringe pattern P1. The luminance change ratio of each of the fringe regions P2a to P2h in the left-right direction (i.e., first direction) is reverse with respect to light and dark.

The measuring unit 40 then obtains a first event waveform W1 in two dimensions representing the output timing of event data having negative polarity output first when the first fringe pattern P1 is captured on the vertical axis and the positions of pixels in the first direction on the horizontal axis. Subsequently, the measuring unit 40 obtains a second event waveform W2 in two dimensions representing the output timing of event data having negative polarity output first when the second fringe pattern P2 is captured on the vertical axis and the positions of pixels in the first direction on the horizontal axis. The measuring unit 40 measures the three-dimensional shape of the measurement target object R0 by the light section method using a composite waveform W obtained by combining the first event waveform W1 and the inverted second event waveform W2 on the basis of the positions of the plurality of pixels identified from the pieces of event data output in the same time slot.

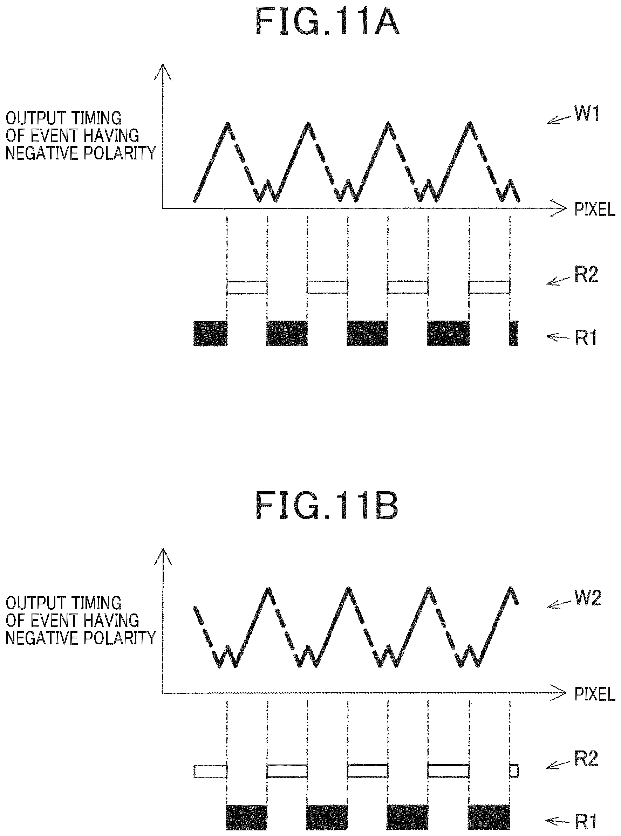

Specifically, for example, in a case where the three-dimensional shape of the measurement target object R0 including the transparent plate R2 on the black plate R1 as illustrated in Fig. 7 is measured, the first event waveform W1 obtained when the first fringe pattern P1 illustrated in Fig. 10A is captured is generated as illustrated in the upper part of Fig. 11A. This first event waveform W1 is generated depending on the shape of a portion of the black plate R1 and the shape of a portion of the transparent plate R2 as illustrated in the lower part of Fig. 11A.

After that, the second event waveform W2 obtained when the second fringe pattern P2 illustrated in Fig. 10B is captured is generated as illustrated in the upper part of Fig. 11B. This second event waveform W2 is generated depending on the shape of the remaining portion other than the portion of the black plate R1 and the shape of the remaining portion other than the portion of the transparent plate R2 as illustrated in the lower part of Fig. 11B.

The first event waveform W1 and the second event waveform W2 are each generated on the basis of the output timing of the first event data having negative polarity. This reduces the influence of the noise described above. In addition, the predetermined ratio of the second fringe pattern P2 is reverse to that of the first fringe pattern P1 with respect to light and dark. The light and dark (i.e., the length relationship of light-emitting time) at the position of the same pixel is thus inverted between the black plate R1 and the transparent plate R2. Therefore, the event data having negative polarity output second when the first fringe pattern P1 is projected is output first when the second fringe pattern P2 is projected.

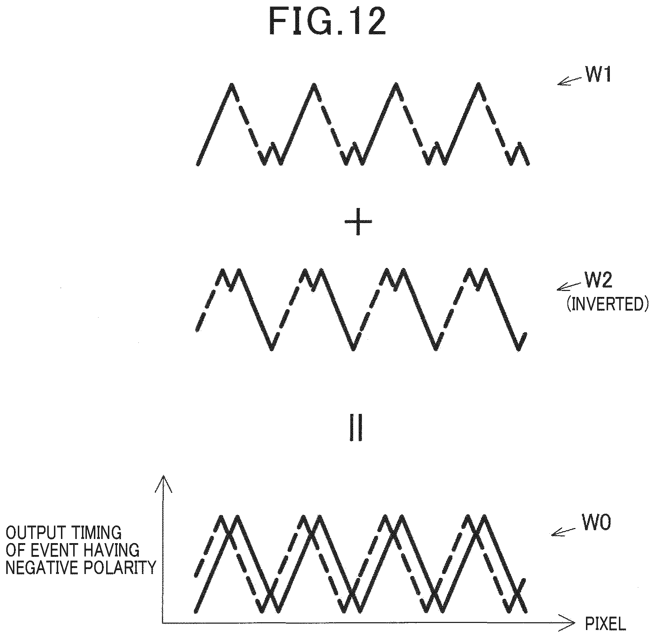

Therefore, as illustrated in Fig. 12, the first event waveform W1 generated when the first fringe pattern P1 is projected and a waveform obtained by inverting the second event waveform W2 generated when the second fringe pattern P2 is projected are combined to generate a composite waveform WO. The composite waveform WO includes one event waveform caused by the shape of the non-transparent object and another event waveform caused by the shape of the transparent object. The use of the one event waveform and the other event waveform separated from the event waveforms combined as described above hereby makes it possible to perform three-dimensional measurement with the non-transparent object and the transparent object distinguished from each other while reducing the influence of noise. It is to be noted that, in a case where no noise is generated, the composite waveform WO illustrated in Fig. 12 is substantially the same as the event waveform illustrated in Fig. 8D.

<Fourth Embodiment>

Next, a three-dimensional measuring apparatus according to a fourth embodiment of the present disclosure will be described with reference to the drawings. The present embodiment is different from the second embodiment chiefly in that the fringe number of a non-transparent object and the fringe number of a transparent object are each identified and three-dimensional measurement is performed by the light section method with the non-transparent object and the transparent object distinguished from each other. Constituent portions that are substantially the same as the constituent portions in the second embodiment are thus denoted by the same reference sign and description thereof is omitted.

In a case where a fringe pattern including a plurality of fringe regions are captured, it is necessary to identify, for each of pixels, which fringe region is captured. Specifically, to identify a fringe number that distinguishes a fringe region, the projection unit 20 further projects a fringe number identifying pattern on the measurement target object R0 on which the fringe pattern is projected. The measuring unit 40 performs fringe number identifying processing of identifying a fringe number on the basis of the output timing of event data having negative polarity output when the measurement target object R0 on which the fringe number identifying pattern is projected is captured.

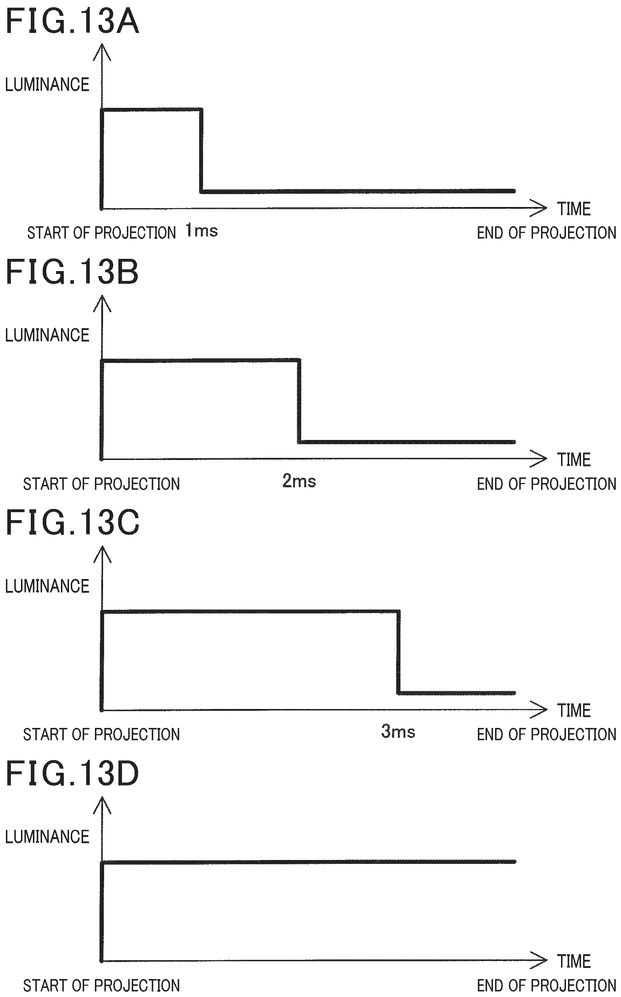

Specifically, for example, a fringe number identifying pattern for a fringe pattern including four fringe regions with fringe numbers 1 to 4 from the left will be described. In the fringe region with fringe number 1, as exemplified in Fig. 13A, the light-emitting time comes to an end 1 ms after the start of projection. In the fringe region with fringe number 2, as exemplified in Fig. 13B, the light-emitting time comes to an end 2 ms after the start of projection. In the fringe region with fringe number 3, as exemplified in Fig. 13C, the light-emitting time comes to an end 3 ms after the start of projection. In the fringe region with fringe number 4, as exemplified in Fig. 13D, the light-emitting time continues until the projection comes to an end. This makes it possible to identify, as 1, the fringe number of the pixel for which the first event data having negative polarity is output, for example, 1 ms after the start of the projection of the fringe number identifying pattern in the fringe number identifying processing performed by the measuring unit 40. Similarly, it is possible to identify, as 2, the fringe number of the pixel for which event data having negative polarity is first output 2 ms after the start of the projection. Additionally, it is possible to change the light-emitting time corresponding to each of the fringe regions as appropriate depending on the measurement target object R0, the measurement environment, or the like. In addition, the unit of the light-emitting time corresponding to each of the fringe regions of the fringe number identifying pattern is different from the unit of the light-emitting time of a fringe pattern. The unit of the light-emitting time corresponding to each fringe region is 1 ms above. That is, the fringe number identifying pattern changes every 1 ms. In this case, the fringe number identifying pattern is stable and it is therefore possible to identify a fringe number more reliably. Meanwhile, the unit of the light-emitting time corresponding to each of the fringe regions of the fringe number identifying pattern may be the same as the unit of the light-emitting time of a fringe pattern. For example, the unit of the light-emitting time corresponding to each fringe region may be 10 $\mu$s. That is, the fringe number identifying pattern may change every 10 $\mu$s. In this case, it is possible to identify a fringe number at high speed.

Here, a configuration will be assumed that allows a fringe number to be identified on the basis of the output timing of event data having negative polarity output first in each of the pixels as described above when the projected fringe number identifying pattern is captured. In the configuration, two pieces of event data each having negative polarity may be output at different timings due to the non-transparent object and the transparent object. This may cause an incorrect fringe number to be identified.

The fringe numbers are therefore identified in the fringe number identifying processing in the present embodiment on the assumption that two pieces of event data each having negative polarity are output for each of the pixels at different timings when the fringe number identifying pattern is captured.

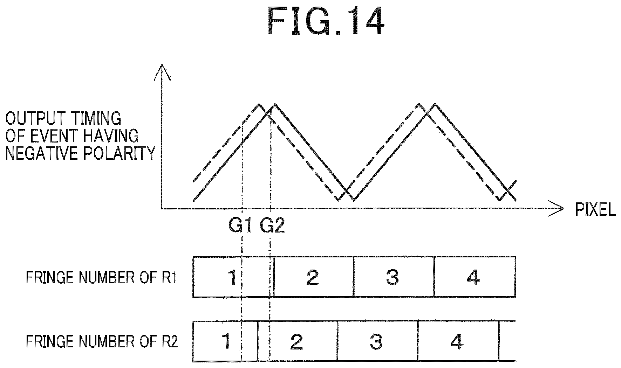

For example, when the measurement target object R0 including the transparent plate R2 on the black plate R1 is measured, a triangle-wave fringe pattern including four fringes (i.e., four fringe regions) is projected. The generated event waveform includes one event waveform (see, for example, the solid waveform in Fig. 14) caused by the shape of the black plate R1 and another event waveform (see, for example, the dashed waveform in Fig. 14) caused by the shape of the transparent plate R2. It is assumed that the fringe number identifying pattern (see, for example, Figs. 13A to 13D) described above is projected in this case.

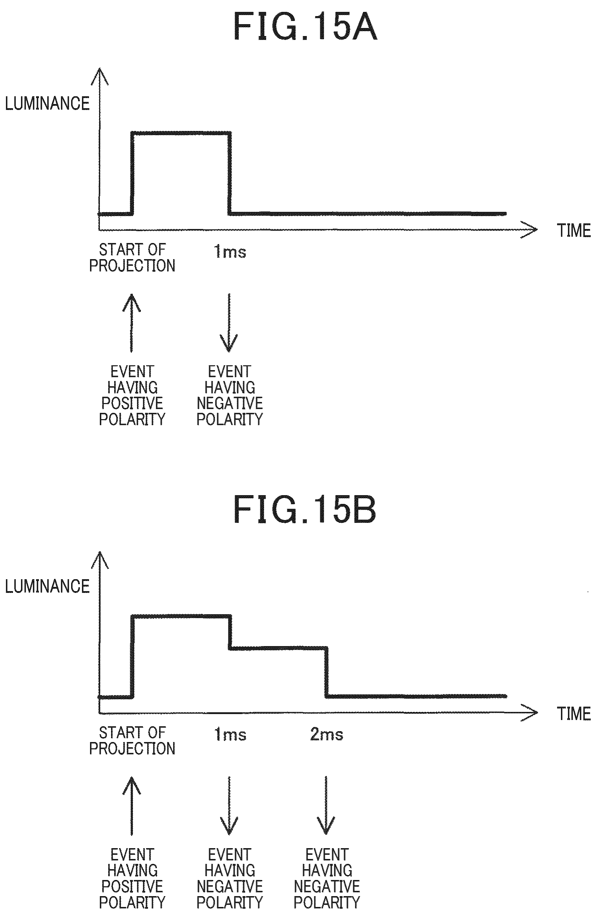

In this case, as can be seen from Fig. 14, both the fringe number of the black plate R1 and the fringe number of the transparent plate R2 are 1 in a pixel G1. As illustrated in Fig. 15A, a luminance change is made 1 ms after the start of the projection of the fringe number identifying pattern. That is, the first event data having negative polarity is output 1 ms after the generation of event data having positive polarity. In this way, in a case where one piece of event data having negative polarity is output when the fringe number identifying pattern is captured, one fringe number is identified for the pixel. This also prevents an incorrect fringe number from being identified for any of the black plate R1 and the transparent plate R2.

Meanwhile, the fringe number of the black plate R1 is 1 and the fringe number of the transparent plate R2 is 2 in a pixel G2. As illustrated in Fig. 15B, the first luminance change is made 1 ms after the start of the projection. This causes the first event data having negative polarity to be output. After that, the second luminance change is made 2 ms after the start of the projection. This causes the second event data having negative polarity to be output. In this way, in a case where two pieces of event data each having negative polarity are output for one pixel at different timings when the fringe number identifying pattern is captured, two fringe numbers 1 and 2 are identified as candidates. It is not, however, identified which of the two fringe numbers is the fringe number of the black plate R1 or the fringe number of the transparent plate R2. In this way, in a case where two fringe numbers are identified as candidates, the fringe number of the black plate R1 and the fringe number of the transparent plate R2 are each identified on the basis of the three-dimensional shape of the measurement target object R0 anticipated in advance. Additionally, it is possible to store information regarding the three-dimensional shape of the measurement target object R0 in a storage unit or the like of the control unit 11 in advance.

That is, it is determined which of a result of measurement performed in a case where the fringe number of the black plate R1 is 1 and the fringe number of the transparent plate R2 is 2 and a result of measurement performed in a case where the fringe number of the black plate R1 is 2 and the fringe number of the transparent plate R2 is 1 is closer to the three-dimensional shape of the measurement target object R0 anticipated in advance. In the example described above, it is determined that the result of the measurement performed in a case where the fringe number of the black plate R1 is 1 and the fringe number of the transparent plate R2 is 2 is closer to the three-dimensional shape of the measurement target object R0, and the fringe number of the black plate R1 is identified as 1 and the fringe number of the transparent plate R2 is identified as 2.

In this way, the fringe numbers are identified in the fringe number identifying processing on the assumption that two pieces of event data each having negative polarity are output for each of the pixels at different timings in some cases when the fringe number identifying pattern is captured. Since the fringe numbers are not identified on the basis of only the output timing of the event data having negative polarity output first, this makes it possible to prevent incorrect fringe numbers from being identified. Then, for a pixel for which two fringe numbers are identified due to the non-transparent object and the transparent object, the fringe number of the non-transparent object and the fringe number of the transparent object are each identified on the basis of the three-dimensional shape of the measurement target object anticipated in advance. This makes it possible to prevent the fringe numbers of the non-transparent object and the transparent object from being mixed up.

<Fifth Embodiment>

Next, a three-dimensional measuring apparatus according to a fifth embodiment of the present disclosure will be described with reference to the drawings. The present embodiment is different from the fourth embodiment chiefly in that two types of fringe number identifying patterns are projected, the fringe number of a non-transparent object and the fringe number of a transparent object are each identified accurately, and three-dimensional measurement is performed by the light section method with the non-transparent object and the transparent object distinguished from each other. Constituent portions that are substantially the same as the constituent portions in the fourth embodiment are thus denoted by the same reference sign and description thereof is omitted.

In a case where two pieces of event data each having negative polarity output for each of pixels at the time of capturing performed once as in the fourth embodiment are used, the first event data having negative polarity is output and event data having the same polarity is then output consecutively for the same pixel. For such a reason, event data that is not supposed to be output is generated as noise and interrupts the accurate identification of a fringe number in some cases.

Therefore, in the present embodiment, the projection unit 20 further projects a first fringe number identifying pattern PP1 and a second fringe number identifying pattern PP2 to identify fringe numbers that distinguish fringe regions. The fringe regions each change in luminance in the left-right direction (i.e., first direction) in predetermined steps such that the luminance is different between the respective fringe regions, and do not each change in luminance in the up-down direction (i.e., second direction) in the first fringe number identifying pattern PP1. The predetermined steps in the first fringe number identifying pattern PP1 are then reverse with respect to light and dark in the second fringe number identifying pattern PP2.

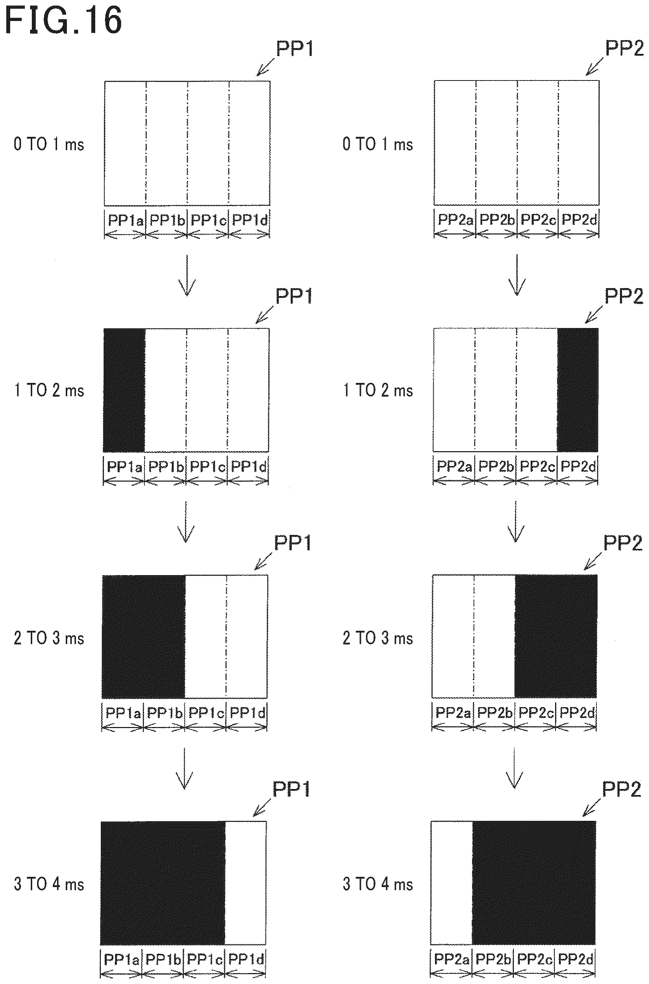

For example, in the first fringe number identifying pattern PP1, the light-emitting time is controlled as in each of Figs. 13A to 13D. In a case where the first fringe number identifying pattern PP1 is projected as in the left part of Fig. 16, the second fringe number identifying pattern PP2 is projected as in the right part of Fig. 16. That is, in a case where the first fringe number identifying pattern PP1 is projected such that a fringe region PP1a, a fringe region PP1b, and a fringe region PP1c are made dark in this order, the second fringe number identifying pattern PP2 is projected such that a fringe region PP2d corresponding to a fringe region PP1d, a fringe region PP2c corresponding to the fringe region PP1c, and a fringe region PP2b corresponding to the fringe region PP1b are made dark in this order.

In the fringe number identifying processing performed by the measuring unit 40, fringe numbers are identified on the basis of the output timing of event data having negative polarity output first when the measurement target object R0 on which the first fringe number identifying pattern PP1 is projected is captured and the output timing of event data having negative polarity output first when the measurement target object R0 on which the second fringe number identifying pattern PP2 is projected is captured.

Specifically, a fringe number identified from the output timing of event data having negative polarity at the time of the projection of the first fringe number identifying pattern PP1 and a fringe number identified from the output timing of event data having negative polarity at the time of the projection of the second fringe number identifying pattern PP2 are each identified for each of the pixels. When the first fringe number identifying pattern PP1 is projected, fringe numbers are identified in the order of 1, 2, 3, and 4 from the left side. When the second fringe number identifying pattern PP2 is projected, fringe numbers are identified in the order of 4, 3, 2, and 1 from the right side. Then, in a case where the fringe numbers identified for the two respective fringe number identifying patterns match each other, the fringe number is identified as the fringe number of the pixel.

In contrast, in a case where the fringe numbers identified for the two respective fringe number identifying patterns are different, the measurement target object R0 including the transparent object on the non-transparent object is being measured. In this case, as in the fourth embodiment, those two fringe numbers are identified as candidates. For example, in the pixel G2 described above, fringe number 1 is identified when the first fringe number identifying pattern PP1 is projected. Fringe number 2 is identified when the second fringe number identifying pattern PP2 is projected. This is because the order of fringe numbers at the time of the projection of the first fringe number identifying pattern PP1 and the order of fringe numbers at the time of the projection of the second fringe number identifying pattern PP2 are mutually reversed in the left-right direction.

In this way, in a case where two fringe numbers are identified as candidates, the fringe number of the non-transparent object and the fringe number of the transparent object are each identified as described above on the basis of the three-dimensional shape of the measurement target object R0 anticipated in advance.

The fringe numbers are identified on the basis of the output timing of the event data having negative polarity output first when the first fringe number identifying pattern PP1 is captured and the output timing of the event data having negative polarity output first when the second fringe number identifying pattern PP2 is captured. This reduces the influence of the noise described above on the identification of fringe numbers. The predetermined steps in the first fringe number identifying pattern PP1 are then reverse with respect to light and dark in the second fringe number identifying pattern PP2. Therefore, the event data having negative polarity output second when the first fringe number identifying pattern PP1 is projected is output first when the second fringe number identifying pattern PP2 is projected. This makes it possible to prevent the fringe numbers of the non-transparent object and the transparent object from being mixed up while reducing the influence of noise.

It is to be noted that the present disclosure is not limited to the respective embodiments and the like. For example, the present disclosure may be configured as follows.

(1) The number of fringe regions included in the fringe pattern P0 described above is not limited to four, but may be two or three, or five or more. Similarly, the number of fringe regions included in the first fringe pattern P1 described above and the number of fringe regions included in the second fringe pattern P2 described above are not each limited to eight, but may be two to seven or nine or more. It is to be noted that the first fringe number identifying pattern PP1 and the second fringe number identifying pattern PP2 each include the same number of fringe regions.

(2) The three-dimensional measuring apparatus 10 may not only move or measure the three-dimensional shape of a measurement target object that relatively moves, being assembled into a hand of a robot. For example, the three-dimensional measuring apparatus 10 may be fixed and measure the three-dimensional shape of a measurement target object that moves on a conveyor line.

(3) In the three-dimensional measuring apparatus 10, the projection unit 20 and the imaging unit 30 may be a different entity from the measuring unit 40. For example, the measuring unit 40 may be an information processing terminal capable of wireless communication or wired communication with the projection unit 20 and the imaging unit 30.

(4) In each of the embodiments, the three-dimensional measurement of the measurement target object R0 is performed using the output timing of event data having negative polarity. This is not, however, limitative. As long as it is possible to appropriately adjust a luminance change of a predetermined fringe pattern projected from the projection unit 20, the three-dimensional measurement of the measurement target object R0 may be performed using the output timing of event data having positive polarity.

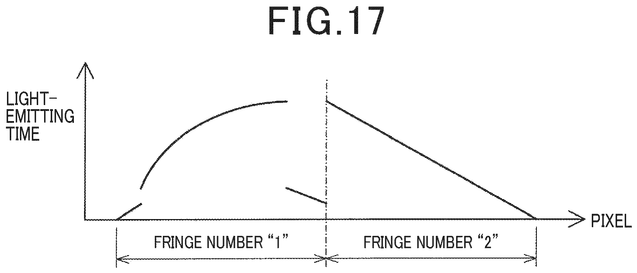

(5) In each of the embodiments, a fringe pattern projected from the projection unit 20 is not necessarily generated as exemplified in any of Figs. 2A, 2B, 6A, 6B, and the like. For example, the fringe pattern may be any pattern as long as the fringe pattern includes a plurality of fringe regions that each changes in luminance in the first direction at a predetermined ratio and does not each change in luminance in the second direction orthogonal to this first direction and the plurality of fringe regions are disposed along the first direction. In addition, the predetermined ratio may differ between the fringe regions as long as the predetermined ratio is set in advance. Specifically, the predetermined ratio is set such that light-emitting time is set for every pixel in each of the fringe regions and two or more pixels do not have the same light-emitting time. For example, as exemplified in Fig. 17, at fringe number 1 (i.e., in the first period), the predetermined ratio may be set such that the light-emitting time linearly increases in the first period of time, logarithmically increases in the next period of time, and linearly decreases in the last period of time. In addition, at fringe number 2 (i.e., in the second period), the predetermined ratio may be set such that the light-emitting time linearly decreases.

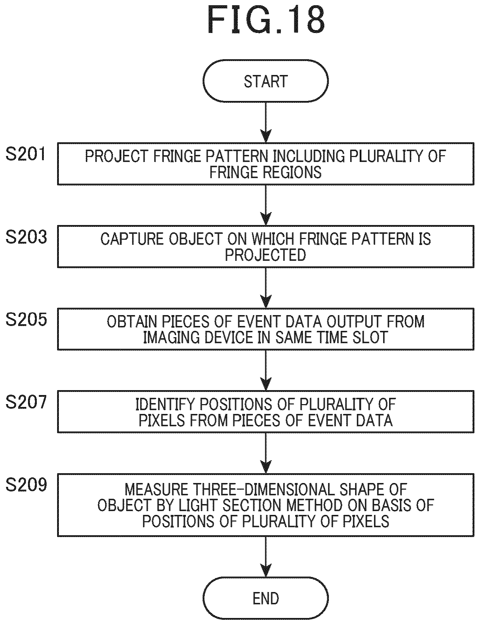

In addition, the three-dimensional measuring apparatus 10 may perform processing as illustrated in the flowchart of Fig. 18. Specifically, the three-dimensional measuring apparatus 10 projects a pattern including a plurality of fringe regions (step S201). The three-dimensional measuring apparatus 10 captures an object on which the fringe pattern is projected (step S203). The three-dimensional measuring apparatus 10 obtains pieces of event data output from the imaging device in the same time slot (step S205). The three-dimensional measuring apparatus 10 identifies the positions of a plurality of pixels from the pieces of event data (step S207). The three-dimensional measuring apparatus 10 measures the three-dimensional shape of the object by the light section method on the basis of the positions of the plurality of pixels (step S209).

<Sixth Embodiment>

For example, an apparatus that uses a phase shift method has been conventionally known as a three-dimensional measuring apparatus that measures the three-dimensional shape and the like of a measurement target object. The phase shift method is a technique that projects a plurality of phase-shifted fringe pattern images to three-dimensionally measure a measurement target object on which the plurality of these fringe pattern images are projected. In the three-dimensional measurement, a phase value corresponding to a value distorted depending on the surface shape of the measurement target object is obtained.

Incidentally, in a case where a phase value is obtained for each of pixels using the phase shift method as described above, it is necessary to project at least three or more types of fringe patterns for phase analysis. Specifically, three or more fringe patterns are projected in a predetermined order. The time to perform the three-dimensional measurement processing is therefore increased by the number of fringe patterns even if it is possible to use event data output from an event camera.

The present disclosure has been devised to solve the problem described above. An object of the present disclosure is to provide an apparatus capable of three-dimensional measurement by projecting a fringe pattern once.

A three-dimensional measuring apparatus (10) according to an embodiment of the present disclosure includes:

a projection unit (20) configured to project a predetermined fringe pattern on a measurement target region;
an imaging unit (30) configured to capture a measurement target object disposed in the measurement target region on which the predetermined fringe pattern is projected;
a measuring unit (40) configured to measure a three-dimensional shape of the measurement target object using a phase value $\theta$ obtained for each of pixels from a captured image of the imaging unit; and
a control unit (11) configured to control the projection unit, in which
whether a digital micromirror device (DMD) in which a plurality of mirrors are disposed in an array reflects incident light is controlled by the control unit for each of the plurality of mirrors, thereby causing the projection unit to project the predetermined fringe pattern such that time from reflection ON to OFF within unit time changes in a predetermined sine-wave pattern along a predetermined pattern direction,
the imaging unit includes an imaging device configured to output event data including two-dimensional point data that identifies a position of a pixel subjected to a luminance change when light is received, and generates the captured image from event data output from the imaging device,
the imaging device outputs event data having positive polarity in a case of a luminance change toward higher brightness and outputs event data having negative polarity in a case of a luminance change toward lower brightness,
the measuring unit calculates, for each of the pixels, a time difference between an output timing of first event data and an output timing of second event data output from the imaging device within the unit time as fringe pattern information Is and obtains the phase value $\theta$ for each of the pixels on the basis of the following expression where $\alpha$ represents

amplitude and β represents an offset value,

Is = α cosθ + β

the first event data is output earlier than the second event data, and

the amplitude α and the offset value β are obtained from information regarding the predetermined sine-wave pattern.

The fringe pattern information Is corresponds to the time difference between the output timings of two pieces of event data caused by the reflection ON/OFF. The predetermined fringe pattern is projected such that the time from the reflection ON to OFF changes in the predetermined sine-wave pattern along the predetermined pattern direction. Here, the amplitude α and the offset value β in the expression are the same as the amplitude and the offset value of the predetermined sine-wave pattern and have been known. This makes it possible to obtain the phase value θ from the fringe pattern information Is obtained by projecting the predetermined fringe pattern once. It is thus possible to implement a three-dimensional measuring apparatus capable of three-dimensional measurement by projecting the predetermined fringe pattern once.

In addition, the measuring unit may obtain the phase value θ for each of pixels on the basis of the calculated fringe pattern information Is and the polarities of the first event data (event data output earlier) and the second event data (event data output later).

It is therefore possible to double the number of phase values θ obtained in one fringe region of the predetermined fringe pattern in comparison with a case where the polarity of event data is not taken into consideration. This makes it possible to decrease the number of fringe regions occupying the predetermined fringe pattern by half and halves the processing time for identifying a fringe region. As a result, it is possible to decrease the processing time of three-dimensional measurement.

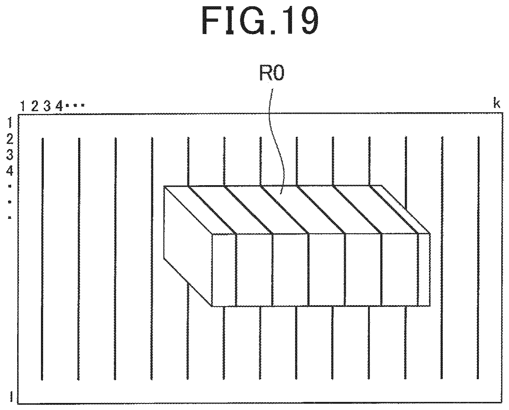

Hereinafter, a three-dimensional measuring apparatus according to a sixth embodiment of the present disclosure will be described with reference to the drawings. The three-dimensional measuring apparatus 10 according to the present embodiment is an apparatus that measures the three-dimensional shape of the measurement target object R0. As illustrated in Figs. 1 and 19, the three-dimensional measuring apparatus 10 includes the control unit 11, the projection unit 20, the imaging unit 30, and the measuring unit 40. The control unit 11 is in charge of overall control. The projection unit 20 projects a predetermined fringe pattern on the measurement target object R0. The imaging unit 30 captures the measurement target object R0 on which the predetermined fringe pattern is projected. The measuring unit 40 measures the three-dimensional shape of the measurement target object R0 from this captured image. The three-dimensional measuring apparatus 10 configured in this way may be assembled, for example, into a hand of a robot to measure the three-dimensional shape of the measurement target object R0 such as a workpiece that is to relatively move with respect to the hand at high speed. Here, the relative movement refers to relative movement between the movement of the three-dimensional measuring apparatus 10 assembled into the hand of the robot and the movement of the measurement target object R0. In a case where the three-dimensional measuring apparatus 10 has a fixed position, the relative movement is the movement of the measurement target object R0.

It is to be noted that Fig. 19 simplifies a typical fringe pattern including up to the thirteenth fringe for the sake of convenience. More specifically, the typical fringe pattern is expressed as a sine-wave pattern and a bright portion and a dark portion of the fringe pattern are thus similar in width. Fig. 19, however, decreases a dark portion in width and illustrates the dark portion by a line for the sake of convenience. In addition, the number of fringes is 13 or more in the embodiment, but is decreased to 13.

As illustrated in Fig. 25, the three-dimensional measuring apparatus 10 includes the processor 101 and the memory 103 as hardware components. For example, the three-dimensional measuring apparatus 10 may include a microcomputer. The microcomputer may include a CPU, a system bus, an input/output interface, a ROM, a RAM, a non-volatile memory, and the like. In addition to a program regarding robot control, the memory 103 stores, in advance, a program regarding control over the projection unit 20, a program for executing control processing using a result of three-dimensional measurement by the measuring unit 40, and the like. The hardware components may implement the functions of the control unit 11 and the measuring unit 40.

The projection unit 20 is a so-called DLP projector. The projection unit 20 is controlled by the control unit 11. The projection unit 20 reflects light coming from a light source using a DMD device to project a predetermined fringe pattern described below. The DMD device includes micromirrors corresponding to the respective pixels of an image projected on a screen. The micromirrors are disposed in an array. The DMD device switches (i.e., turns ON/OFF) light to be emitted to the screen in units of microseconds by changing the angles of the respective mirrors. Each of the mirrors is therefore switched to the light-on state by being switched from reflection OFF to reflection ON and switched to the light-off state by being switched from reflection ON to reflection OFF. That is, whether the DMD in which the plurality of mirrors are disposed in an array reflects incident light is controlled by the control unit 11 for each of the mirrors. This causes the projection unit 20 to project a predetermined fringe pattern such that the time from the reflection ON to OFF within unit time changes in a predetermined sine-wave pattern along a predetermined pattern direction. The control unit 11 therefore changes the gradation (i.e., brightness) of reflected light depending on the ratio between the time for which each mirror is ON and the time for which each mirror is OFF. This allows the gradation of a projected image to be displayed on the basis of the image data.

In such a configuration, as the light-emitting time (i.e., the time from reflection ON to reflection OFF) of a single pulse light emission made once within unit time secured for each light-emitting state grows longer, the light-emitting state results in higher brightness. It is therefore possible to identify the light-emitting state depending on the light-emitting time. In a case where the upper left coordinates are set as (1, 1) and the lower right coordinates are set as *(k, l)* for pixels in Fig. 19, the projection unit 20 includes mirrors corresponding to $k \times l$ (e.g., $1140 \times 912$) pixels. In addition, for example, a case will be considered where R color (red), G color (green), and B color (blue) are prepared as pieces of light entering the DMD device. In this case, the R color light-emitting state caused by the R color being reflected by a mirror, the G color light-emitting state caused by the G color being reflected by a mirror, and the B color light-emitting state caused by the B color being reflected by a mirror are repeated in a predetermined short-time period. The light-emitting time of each light-emitting state is individually adjusted, thereby allowing a color image to be projected. The control unit 11 therefore sets a reflection ON/OFF timing within the unit time for each of the mirrors depending on a predetermined fringe pattern described below.

The imaging unit 30 is a so-called event camera. The imaging unit 30 includes the imaging device that outputs event data (specifically, two-dimensional point data, time, and the polarity of a luminance change) including two-dimensional point data that identifies the position of a pixel subjected to a luminance change when light is received. The imaging unit 30 generates a captured image from the event data output from the imaging device. Therefore, in the imaging unit 30, event data having positive polarity (i.e., positive luminance change) is output when each of the pixels in the captured image is subjected to a luminance change toward higher brightness by light being received. Event data having negative polarity (i.e., negative luminance change) is output when each of the pixels is subjected to a luminance change toward lower brightness by the light being extinguished. The pieces of two-dimensional point data of a plurality of pieces of event data output within a certain period of time are each plotted on a predetermined flat surface as a point, thereby generating image data of the captured measurement target object R0. The imaging unit 30 outputs the image data or the event data (i.e., the two-dimensional point data, the time, the polarity of the luminance change) generated in this way to the measuring unit 40. In the present embodiment, the projection unit 20 and the imaging unit 30 are disposed such that the projection range of a predetermined fringe pattern projected from the projection unit 20 at a position a predefined distance away from the three-dimensional measuring apparatus 10 and the whole of the capturing visual field of the imaging unit 30 or a portion of the capturing visual field of the imaging unit 30 defined in advance match each other.

The measuring unit 40 is controlled by the control unit 11. The measuring unit 40 measures the three-dimensional shape of the measurement target object R0 using the phase value θ obtained for each of pixels from a captured image obtained by the imaging unit 30 capturing the measurement target object R0 on which a predetermined fringe pattern defined in advance is projected from the projection unit 20.

Here, first, a typical phase shift method will be described. Typically, in the phase shift method, the phase value θ corresponding to a value distorted depending on the surface shape of the measurement target object R0 is obtained on the basis of a grid image (i.e., fringe image) that is a captured image of the measurement target object R0 on which a fringe pattern defined in advance is projected. The phase shift method then adopts a sine-wave pattern identified from a luminance value I(x, y, n) in the following Expression (1). That is, when N represents the number of phase shifts, the luminance values I(x, y, n) of N phase-shifted grid images (i.e., fringe images) are each expressed by Expression (1).

$$I(x, y, n) = a(x, y) \cos\{\theta(x, y) + 2\pi n/N\} + b(x, y) \ ... \ (1)$$

Here, the point (x, y) represents one point (i.e., one pixel) in a grid image. a(x, y) represents luminance amplitude. b(x, y) represents background luminance. θ(x, y) represents the phase value of a grid obtained when n = 0 is satisfied. Depending on the phase value θ(x, y) obtained from the luminance values I(x, y, n) of the N grid images, the distance to the point (x, y) is measured.

Specifically, for example, a case will be considered where three grid images are obtained in one period including the R color light-emitting state, the G color light-emitting state, and the B color light-emitting state described above. In this case, a luminance value I(x, y, 0) in the R color light-emitting state, a luminance value I(x, y, 1) in the G color light-emitting state, and a luminance value I(x, y, 2) in the B color light-emitting state are obtained from captured images on the assumption of N = 3. In this case, a predetermined fringe pattern for the phase shift method is configured such that a sine-wave pattern including only the R color, a sine-wave pattern including only the G color, and a sine-wave pattern including only the B color are mutually phase-shifted by $2\pi/3$.

Therefore, the measuring unit 40 obtains the phase value θ(x, y) using Expression (1) in a case where the luminance value I(x, y, 0), the luminance value I(x, y, 1), and the luminance value I(x, y, 2) are obtained at the point (x, y) in the captured images. The measuring unit 40 measures the distance to the point (x, y) depending on the phase value θ(x, y) obtained in this way. The measurement of the distance of each point (x, y) of the measurement target object R0 captured in this way makes it possible to measure the three-dimensional shape of the measurement target object R0.

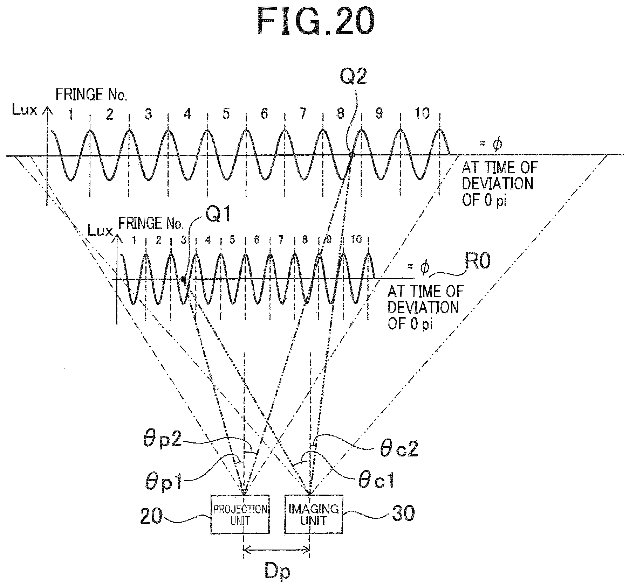

For example, in a case where the distance from the three-dimensional measuring apparatus 10 to a point Q1 in Fig. 20 is obtained, the measuring unit 40 obtains the phase value θ of the point Q1 and information (i.e., fringe number) indicating in which fringe the point Q1 is located from N captured images obtained by the imaging unit 30 capturing in a state where a predetermined fringe pattern is shifted by N times and projected by the projection unit 20. An angle θp1 of the projection unit 20 and an angle θc1 of the imaging unit 30 are obtained from the phase value θ and the fringe number obtained in this way. Since the distance (i.e., parallax Dp) between the projection unit 20 and the imaging unit 30 is known, it is possible to obtain the distance of the point Q1 by triangulation. Similarly, it is possible to obtain the distance of a point Q2 in Fig. 20 by triangulation on the basis of the phase value θ of the point Q2 obtained from the N captured images and an angle θp2 of the projection unit 20 and an angle θc2 of the imaging unit 30 obtained from the fringe number. This calculation applied to the whole of the measurement area makes it possible to perform three-dimensional measurement.

Next, the three-dimensional measurement processing performed by the measuring unit 40 when the three-dimensional shape of the measurement target object R0 is measured in the present embodiment will be described in detail with reference to the drawings. The present embodiment adopts an event camera as an imaging unit that accurately captures the measurement target object R0 which relatively moves at high speed. In such a configuration, event data corresponding to a pixel subjected to a luminance change is output. That event data does not, however, include any luminance value and it is not thus possible to directly obtain luminance values (e.g., I(x, y, 0), I(x, y, 1), and I(x, y, 2) described above) necessary for the phase shift method.

Therefore, in the present embodiment, the predetermined fringe pattern (i.e., the fringe pattern in which the same fringe region is repeatedly disposed along the predetermined pattern direction) that changes in the predetermined sine-wave pattern is projected on the measurement target object R0. Furthermore, the measuring unit 40 obtains, for each of pixels, the phase value θ corresponding to a value distorted depending on the surface shape of the measurement target object R0 on the basis of the length of the light-on or light-off time in the three-dimensional measurement processing, thereby measuring the three-dimensional shape of the measurement target object R0.

Specifically, the measuring unit 40 calculates, for each of the pixels as the fringe pattern information Is, the time difference between the output timing of event data having positive polarity output earlier and the output timing of event data having negative polarity output later from the imaging device within the unit time. The measuring unit 40 obtains the phase value θ for each of pixels on the basis of the following Expression (3) derived from the following Expression (2) including the amplitude α and the offset value β.

$$Is(x, y) = \alpha \cos\theta(x, y) + \beta \ ... \ (2)$$

$$\theta(x, y) = \arccos\{[Is(x, y) - \beta]/\alpha\} \ ... \ (3)$$

The fringe pattern information Is corresponds to the time difference between the output timings of two pieces of event data caused by the reflection ON/OFF. The predetermined fringe pattern is projected such that the time from the reflection ON to OFF changes in the predetermined sine-wave pattern along the predetermined pattern direction.

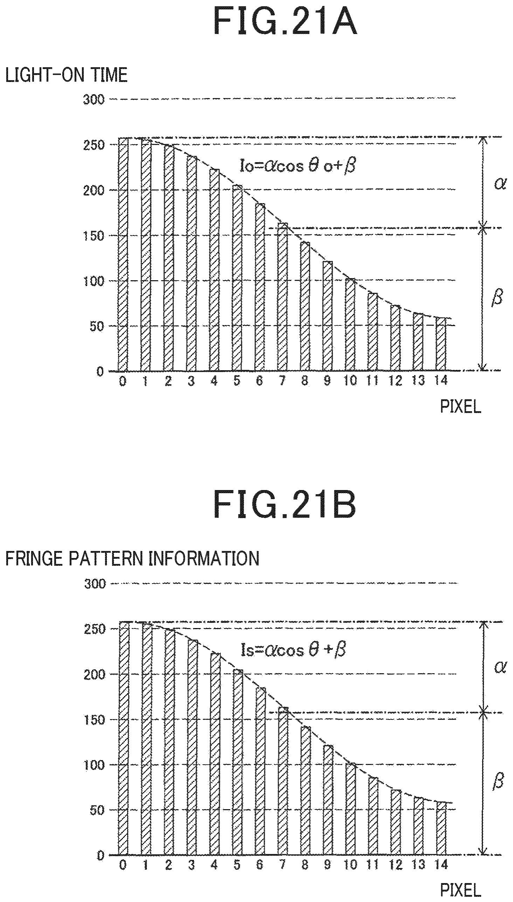

In the present embodiment, the amplitude α and the offset value β in the expressions have the same values as those of the amplitude and the offset value of the predetermined sine-wave pattern at the time of projection for the following reasons. For example, a case will be assumed where one of the plurality of fringe regions included in the predetermined fringe pattern is generated in a projection pattern as illustrated in Fig. 21A. It is to be noted that Fig. 21A illustrates pixel positions in the fringe region on the horizontal axis and time (i.e., light-on time: ON time) Io from reflection ON to reflection OFF on the vertical axis. To allow the one phase value θ (i.e., pixel) to be identified from one light-on time, the present embodiment adopts a half-period sine-wave pattern (i.e., a cosine curve from 0 deg to 180 deg) for each of the fringe regions as can be seen from Fig. 21A.

As can be seen from Fig. 21B, the amplitude α and the offset value β of a waveform pattern obtained by an event camera capturing an area on which a projection pattern as described above is projected are the same as the amplitude and the offset value of the projection pattern. In the luminance criterion (i.e., processing based on luminance) adopted in a conventional phase shift method, amplitude and an offset value change between the projecting side and the imaging side due to light attenuation or the like. However, in the time criterion (i.e., processing based on the length of light-on or light-off time) as in the present embodiment, there is substantially no delay or the like between the projecting side and the imaging side. Therefore, the amplitude and the offset value of the projection pattern on the projecting side and the amplitude and the offset value of the waveform pattern on the imaging side are the same. It is to be noted that Fig. 21B illustrates pixel positions on the horizontal axis as with Fig. 21A and the fringe pattern information Is on the vertical axis. The fringe pattern information Is is the time difference between the output timing of event data having positive polarity output earlier and the output timing of event data having negative polarity output later.

Since the amplitude α and the offset value β in any of Expressions (2) and (3) are the same as the amplitude and the offset value of the predetermined sine-wave pattern at the time of projection and have been known, it is possible to obtain the amplitude α and the offset value β in any of Expressions (2) and (3) from information regarding the predetermined sine-wave pattern. In this way, it is possible to treat the amplitude α and the offset value β as having been known. Therefore, it is possible to obtain the phase value θ for each of pixels from the fringe pattern information Is obtained by making one projection instead of making a plurality of projections as in the phase shift method. It is thus possible to implement the three-dimensional measuring apparatus 10 capable of three-dimensional measurement by projecting the predetermined fringe pattern once while using event data. As a result, it is possible to decrease the time of the three-dimensional measurement processing.

It is to be noted that the time difference between the output timing of event data having negative polarity output earlier and the output timing of event data having positive polarity output later from the imaging device within unit time may be calculated as the fringe pattern information Is in the three-dimensional measurement processing performed by the measuring unit 40.

<Seventh Embodiment>

Next, a three-dimensional measuring apparatus according to a seventh embodiment of the present disclosure will be described with reference to the drawings. The present embodiment is different from the sixth embodiment chiefly in that the phase value θ is obtained using even the polarity of event data. Constituent portions that are substantially the same as the constituent portions in the sixth embodiment are thus denoted by the same reference sign and description thereof is omitted.

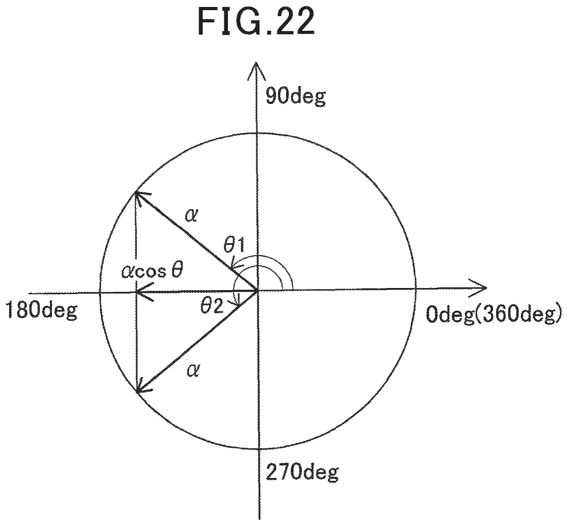

To allow the one phase value θ to be identified from one light-on time, the sixth embodiment described above adopts a half-period sine-wave pattern (i.e., a cosine curve from 0 deg to 180 deg) for each of the fringe regions. As can be seen from Fig. 22, this is because the two phase values θ (see, for example, reference signs θ1 and 02 in Fig. 22) are calculated for one light-on time when a one-period sine-wave pattern is adopted.

Meanwhile, in the present embodiment, even the polarity of event data is used to decrease the number of fringe regions (i.e., the number of fringes) occupying the predetermined fringe pattern. Specifically, a one-period sine-wave pattern (i.e., a cosine curve from 0 deg to 360 deg) is adopted for each of the fringe regions.

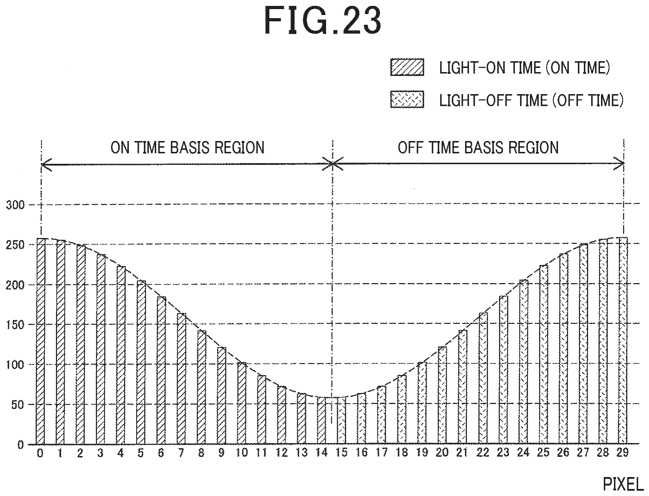

Therefore, the predetermined fringe pattern in the present embodiment changes as illustrated in Fig. 23 for the respective fringe regions. Specifically, the time (i.e., light-on time: ON time) from reflection ON to reflection OFF changes in the region of the cosine curve of 0 deg or more to less than 180 deg and the time (i.e., light-off time: OFF time) from reflection OFF to reflection ON changes in the region of the cosine curve of 180 deg or more to less than 360 deg for the respective fringe regions.

Thereby, by performing capturing in the region (also referred to as ON time basis region below) of 0 deg or more and less than 180 deg among the fringe regions, event data having negative polarity is output after event data having positive polarity is output earlier. Therefore, the time difference between the output timing of the event data having positive polarity and the output timing of the event data having negative polarity is calculated as the fringe pattern information Is. In addition, by performing capturing in the region (also referred to as OFF time basis region below) of 180 deg or more and less than 360 deg among the fringe regions, event data having positive polarity is output after event data having positive negative is output earlier. Therefore, the time difference between the output timing of the event data having negative polarity and the output timing of the event data having positive polarity is calculated as the fringe pattern information Is.

Therefore, even in a case where fringe pattern information having the same time difference between the output timings of the two pieces of event data is calculated, the polarity of the event data output earlier or the polarity of the event data output later (or both of them) makes it possible to determine whether the obtained phase value θ belongs to ON time basis region or OFF time basis region. That is, the use of the polarity of event data makes it possible to adopt a fringe region generated in a one-period sine-wave pattern.

In this way, the measuring unit 40 in the present embodiment obtains the phase value θ for each of pixels in the three-dimensional measurement processing on the basis of the calculated fringe pattern information Is and the polarities of event data output earlier and event data output later. That is, in the present embodiment, it is possible to adopt a fringe region generated in a one-period sine-wave pattern. Therefore, in the present embodiment, it is possible to double the number of phase values θ obtained in one fringe region in comparison with a case where the polarity of event data is not taken into consideration (e.g., the case of the sixth embodiment). This makes it possible to decrease the number of fringes (i.e., the number of fringe regions) by half and halves the processing time for identifying a fringe region. As a result, it is possible to decrease the processing time of three-dimensional measurement.

It is to be noted that the present disclosure is not limited to the embodiments. For example, the present disclosure may be configured as follows.

(1) The three-dimensional measuring apparatus 10 may not only move or measure the three-dimensional shape of a measurement target object that relatively moves, being assembled into a hand of a robot. For example, the three-dimensional measuring apparatus 10 may be fixed and measure the three-dimensional shape of a measurement target object that moves on a conveyor line.

(2) In the three-dimensional measuring apparatus 10, the projection unit 20 and the imaging unit 30 may be included in a different entity from the measuring unit 40. For example, the measuring unit 40 may be an information processing terminal capable of wireless communication or wired communication with the projection unit 20 and the imaging unit 30.

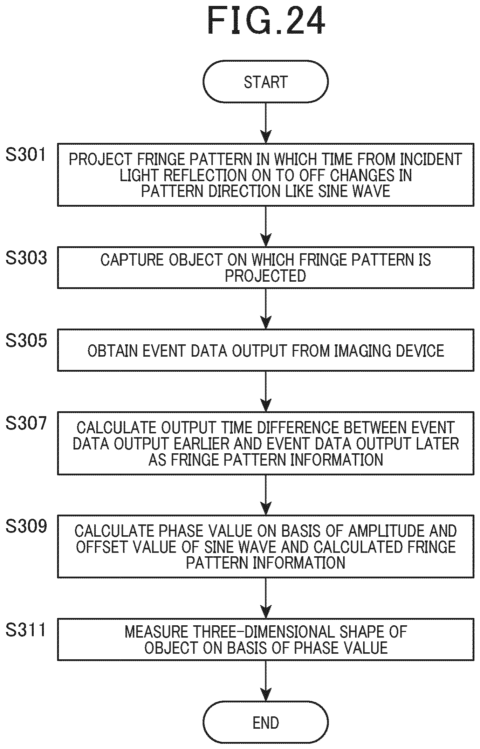

In addition, the three-dimensional measuring apparatus 10 may perform processing as illustrated in the flowchart of Fig. 24. Specifically, the three-dimensional measuring apparatus 10 projects a fringe pattern in which the time from incident light reflection ON to OFF changes in a pattern direction like a sine wave (step S301). The three-dimensional measuring apparatus 10 captures an object on which the fringe pattern is projected (step S303). The three-dimensional measuring apparatus 10 obtains pieces of event data output from the imaging device (step S305). The three-dimensional measuring apparatus 10 calculates the output time difference between event data output earlier and event data output later as fringe pattern information (step S307). The three-dimensional measuring apparatus 10 calculates a phase value on the basis of the amplitude and the offset value of the sine wave and the calculated fringe pattern information (step S309). The three-dimensional measuring apparatus 10 measures the three-dimensional shape of an object on the basis of the phase value (step S311).

## Claims

1. A three-dimensional measuring apparatus comprising:

   a projection unit configured to project a predetermined fringe pattern on a measurement target region;
   an imaging unit configured to capture a measurement target object disposed in the measurement target region on which the predetermined fringe pattern is projected;
   a measuring unit configured to measure a three-dimensional shape of the measurement target object captured by the imaging unit; and
   a control unit configured to control the projection unit, wherein
   the predetermined fringe pattern includes a plurality of fringe regions that are disposed along a first direction, and each of the plurality of fringe regions changes in luminance in the first direction at a predetermined ratio and does not change in luminance in a second direction orthogonal to the first direction,
   the imaging unit includes an imaging device configured to output event data including two-dimensional point data that identifies a position of a pixel subjected to a luminance change when light is received, and
   the measuring unit measures the three-dimensional shape of the measurement target object by a light section method on a basis of positions of a plurality of pixels identified from pieces of the event data output in an identical time slot within unit time within which the imaging unit performs capturing.

2. The three-dimensional measuring apparatus according to claim 1, wherein the measuring unit measures the three-dimensional shape of the measurement target object by the light section method using an event waveform in two dimensions on the basis of the positions of the plurality of pixels identified from the pieces of event data output in the identical time slot, the two dimensions representing an output timing of the event data output when the predetermined fringe pattern is captured on a vertical axis and a position of a pixel in the first direction on a horizontal axis.

3. The three-dimensional measuring apparatus according to claim 1, wherein

   the imaging device outputs event data having positive polarity in a case of a luminance change toward higher brightness and outputs event data having negative polarity in a case of a luminance change toward lower brightness, and
   the measuring unit measures the three-dimensional shape of the measurement target object by the light section method using an event waveform in two dimensions on the basis of the positions of the plurality of pixels identified from the pieces of event data output in the identical time slot, the two dimensions representing an output timing of the event data having negative polarity on a vertical axis and a position of a pixel in the first direction on a horizontal axis, the event data having negative polarity being output when the predetermined fringe pattern is captured.

4. The three-dimensional measuring apparatus according to claim 1, wherein

   after projecting a first fringe pattern as the predetermined fringe pattern, the projection unit projects, as the predetermined fringe pattern, a second fringe pattern in which the predetermined ratio in the first fringe pattern is reverse with respect to light and dark, and
   the measuring unit

calculates a first event waveform in two dimensions representing an output timing of the event data output first when the first fringe pattern is captured on a vertical axis and a position of a pixel in the first direction on a horizontal axis,

calculates a second event waveform in two dimensions representing an output timing of the event data output first when the second fringe pattern is captured on a vertical axis and the position of the pixel in the first direction on a horizontal axis, and

measures the three-dimensional shape of the measurement target object by the light section method using a composite waveform obtained by combining the first event waveform and the inverted second event waveform on the basis of the positions of the plurality of pixels identified from the pieces of event data output in the identical time slot.

5. The three-dimensional measuring apparatus according to claim 1, wherein

the imaging device outputs event data having positive polarity in a case of a luminance change toward higher brightness and outputs event data having negative polarity in a case of a luminance change toward lower brightness,

after projecting a first fringe pattern as the predetermined fringe pattern, the projection unit projects, as the predetermined fringe pattern, a second fringe pattern in which the predetermined ratio in the first fringe pattern is reverse with respect to light and dark, and

the measuring unit

calculates a first event waveform in two dimensions representing an output timing of the event data having negative polarity output first when the first fringe pattern is captured on a vertical axis and a position of a pixel in the first direction on a horizontal axis,

calculates a second event waveform in two dimensions representing an output timing of the event data having negative polarity output first when the second fringe pattern is captured on a vertical axis and the position of the pixel in the first direction on a horizontal axis, and

measures the three-dimensional shape of the measurement target object by the light section method using a composite waveform obtained by combining the first event waveform and the inverted second event waveform on the basis of the positions of the plurality of pixels identified from the pieces of event data output in the identical time slot.

6. The three-dimensional measuring apparatus according to any one of claims 2 to 5, wherein

the projection unit further projects a fringe number identifying pattern to identify fringe numbers that distinguish the plurality of fringe regions,

the measuring unit identifies the fringe numbers on a basis of an output timing of the event data output when the fringe number identifying pattern is captured, and

the measuring unit identifies, for a pixel for which the two fringe numbers are identified, both the fringe number of a non-transparent object included in the measurement target object and the fringe number of a transparent object included in the measurement target object on a basis of the three-dimensional shape of the measurement target object anticipated in advance.

7. The three-dimensional measuring apparatus according to any one of claims 2 to 5, wherein

the projection unit further projects a first fringe number identifying pattern and a second fringe number identifying pattern to identify fringe numbers that distinguish the plurality of fringe regions,

each of the plurality of fringe regions changes in luminance in the first direction in predetermined steps such that the luminance is different between the plurality of respective fringe regions, and does not change in luminance in the second direction in the first fringe number identifying pattern,

the predetermined steps in the first fringe number identifying pattern are reverse with respect to light and dark in the second fringe number identifying pattern,

the measuring unit identifies the fringe numbers on a basis of an output timing of the event data output first when the first fringe number identifying pattern is captured and an output timing of the event data output first when the second fringe number identifying pattern is captured, and

the measuring unit identifies, for a pixel for which the two fringe numbers are identified, both the fringe number of a non-transparent object included in the measurement target object and the fringe number of a transparent object included in the measurement target object on a basis of the three-dimensional shape anticipated in advance.

# FIG.1

10

11 — CONTROL UNIT | MEASURING UNIT — 40

20 — PROJECTION UNIT | IMAGING UNIT — 30

MEASUREMENT TARGET OBJECT — R0

# FIG.2A

P0

| Pa | Pb | Pc | Pd |

# FIG.2B

LIGHT-EMITTING
TIME

PIXEL

## FIG.3A

Sa

Sb

Sd

Sc

Pa · Pb · Pc · Pd

## FIG.3B

Sa

Sb

Sd

Sc

Pa · Pb · Pc · Pd

## FIG.3C

Sa

Sb

Sd

Sc

Pa · Pb · Pc · Pd

# FIG.4A

# FIG.4B

# FIG.4C

# FIG.5

OUTPUT TIMING OF EVENT
HAVING NEGATIVE POLARITY

# FIG.6A

P0

| Pa | Pb | Pc | Pd |

# FIG.6B

LIGHT-EMITTING
TIME

PIXEL

# FIG.7

FIG.8A

P0

FIG.8B

OUTPUT TIMING
OF EVENT HAVING
NEGATIVE POLARITY

PIXEL

FIG.8C

OUTPUT TIMING
OF EVENT HAVING
NEGATIVE POLARITY

PIXEL

FIG.8D

OUTPUT TIMING
OF EVENT HAVING
NEGATIVE POLARITY

PIXEL

# FIG.9

OUTPUT TIMING
OF EVENT HAVING
NEGATIVE POLARITY

PIXEL

R2

R1

# FIG.10A

P1

| P1a | P1b | P1c | P1d | P1e | P1f | P1g | P1h |

# FIG.10B

P2

| P2a | P2b | P2c | P2d | P2e | P2f | P2g | P2h |

29

# FIG.11A

OUTPUT TIMING
OF EVENT HAVING
NEGATIVE POLARITY

W1

PIXEL

R2

R1

# FIG.11B

OUTPUT TIMING
OF EVENT HAVING
NEGATIVE POLARITY

W2

PIXEL

R2

R1

# FIG.12

← W1

+

← W2
(INVERTED)

‖

OUTPUT TIMING
OF EVENT HAVING
NEGATIVE POLARITY

← W0

PIXEL

# FIG.13A

LUMINANCE

START OF PROJECTION 1ms TIME

END OF PROJECTION

# FIG.13B

LUMINANCE

START OF PROJECTION 2ms TIME

END OF PROJECTION

# FIG.13C

LUMINANCE

START OF PROJECTION 3ms TIME

END OF PROJECTION

# FIG.13D

LUMINANCE

START OF PROJECTION TIME

END OF PROJECTION

# FIG.14

OUTPUT TIMING
OF EVENT HAVING
NEGATIVE POLARITY

PIXEL

G1 G2

| FRINGE NUMBER OF R1 | 1 | 2 | 3 | 4 |
|---|---|---|---|---|

| FRINGE NUMBER OF R2 | 1 | 2 | 3 | 4 | |
|---|---|---|---|---|---|

# FIG.15A

LUMINANCE

START OF
PROJECTION

1ms

TIME

EVENT
HAVING
POSITIVE
POLARITY

EVENT
HAVING
NEGATIVE
POLARITY

# FIG.15B

LUMINANCE

START OF
PROJECTION

1ms

2ms

TIME

EVENT
HAVING
POSITIVE
POLARITY

EVENT
HAVING
NEGATIVE
POLARITY

EVENT
HAVING
NEGATIVE
POLARITY

# FIG.16

# FIG.17

# FIG.18

START

S201 | PROJECT FRINGE PATTERN INCLUDING PLURALITY OF FRINGE REGIONS

S203 | CAPTURE OBJECT ON WHICH FRINGE PATTERN IS PROJECTED

S205 | OBTAIN PIECES OF EVENT DATA OUTPUT FROM IMAGING DEVICE IN SAME TIME SLOT

S207 | IDENTIFY POSITIONS OF PLURALITY OF PIXELS FROM PIECES OF EVENT DATA

S209 | MEASURE THREE-DIMENSIONAL SHAPE OF OBJECT BY LIGHT SECTION METHOD ON BASIS OF POSITIONS OF PLURALITY OF PIXELS

END

# FIG.19

# FIG.20

# FIG.21A

LIGHT-ON TIME

$$I_o = \alpha\cos\theta_o + \beta$$

PIXEL

# FIG.21B

FRINGE PATTERN INFORMATION

$$I_s = \alpha\cos\theta + \beta$$

PIXEL

# FIG.22

# FIG.23

# FIG.24

START

S301 | PROJECT FRINGE PATTERN IN WHICH TIME FROM INCIDENT LIGHT REFLECTION ON TO OFF CHANGES IN PATTERN DIRECTION LIKE SINE WAVE

S303 | CAPTURE OBJECT ON WHICH FRINGE PATTERN IS PROJECTED

S305 | OBTAIN EVENT DATA OUTPUT FROM IMAGING DEVICE

S307 | CALCULATE OUTPUT TIME DIFFERENCE BETWEEN EVENT DATA OUTPUT EARLIER AND EVENT DATA OUTPUT LATER AS FRINGE PATTERN INFORMATION

S309 | CALCULATE PHASE VALUE ON BASIS OF AMPLITUDE AND OFFSET VALUE OF SINE WAVE AND CALCULATED FRINGE PATTERN INFORMATION

S311 | MEASURE THREE-DIMENSIONAL SHAPE OF OBJECT ON BASIS OF PHASE VALUE

END

# FIG.25

## INTERNATIONAL SEARCH REPORT

| International application No. |
|---|
| **PCT/JP2024/003160** |

**A. CLASSIFICATION OF SUBJECT MATTER**

*G01B 11/25*(2006.01)i

FI: G01B11/25 H

According to International Patent Classification (IPC) or to both national classification and IPC

**B. FIELDS SEARCHED**

Minimum documentation searched (classification system followed by classification symbols)

G01B11/00-11/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2021/085419 A1 (DENSO WAVE INCORPORATED) 06 May 2021 (2021-05-06) entire text, all drawings | 1-7 |
| A | WO 2022/050279 A1 (FANUC CORPORATION) 10 March 2022 (2022-03-10) entire text, all drawings | 1-7 |
| A | CN 109458928 A (ZHISENSOR TECHNOLOGIES CO., LTD.) 12 March 2019 (2019-03-12) whole document | 1-7 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 March 2024** | **09 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/003160**

| Patent document cited in search report | | | Publication date (day/month/year) | Patent family member(s) | | | Publication date (day/month/year) |
|---|---|---|---|---|---|---|---|
| WO | 2021/085419 | A1 | 06 May 2021 | US | 2022/0349707 | A1 | |
| | | | | whole document | | | |
| | | | | EP | 4053499 | A1 | |
| | | | | CN | 114424020 | A | |
| WO | 2022/050279 | A1 | 10 March 2022 | US | 2022/0349707 | A1 | |
| | | | | whole document | | | |
| | | | | EP | 4053499 | A1 | |
| | | | | CN | 114424020 | A | |
| CN | 109458928 | A | 12 March 2019 | (Family: none) | | | |

Form PCT/ISA/210 (patent family annex) (July 2022)

46

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021067644 A